(19) Europäisches Patentamt / European Patent Office / Office européen des brevets

(11) **EP 1 814 643 B1**

(12) **EUROPÄISCHE PATENTSCHRIFT**

(45) Veröffentlichungstag und Bekanntmachung des Hinweises auf die Patenterteilung:
**25.02.2009 Patentblatt 2009/09**

(21) Anmeldenummer: **06818699.8**

(22) Anmeldetag: **21.11.2006**

(51) Int Cl.:
**B01D 29/11** *(2006.01)*     **B01D 29/68** *(2006.01)*

(86) Internationale Anmeldenummer:
**PCT/EP2006/011140**

(87) Internationale Veröffentlichungsnummer:
**WO 2007/062763 (07.06.2007 Gazette 2007/23)**

(54) **RÜCKSPÜLFILTER UND ZUGEHÖRIGES FILTERELEMENT**

BACKFLUSHING FILTER AND FILTER ELEMENT FOR IT

FILTRE A RINÇAGE A CONTRE-COURANT ET ELEMENT DE FILTRAGE A CET EFFET

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.12.2005 DE 202005018852 U**
**01.12.2005 DE 202005018853 U**

(43) Veröffentlichungstag der Anmeldung:
**08.08.2007 Patentblatt 2007/32**

(73) Patentinhaber: **Boll & Kirch Filterbau GmbH**
**50170 Kerpen (DE)**

(72) Erfinder:
• **CARTARIUS, Karsten**
**52391 Vettweis (DE)**
• **SCHMITZ, Stefan**
**50354 Hürth (DE)**
• **LENNARTZ, Rüdiger**
**50259 Pulheim (DE)**

(74) Vertreter: **Althaus, Arndt et al**
**Patentanwälte,**
**Buschhoff Hennicke Althaus**
**Postfach 19 04 08**
**50501 Köln (DE)**

(56) Entgegenhaltungen:
**EP-A- 1 685 888      EP-A1- 0 656 223**
**WO-A-01/21277        DE-A1- 10 244 660**

**Beschreibung**

Die Erfindung betrifft einen Rückspülfilter zum Filtern von Fluiden, mit mehreren, konzentrisch um eine Mittelachse angeordneten, an beiden Enden offenen Filterelementen, die ein mit einem Stützmittel abgestütztes, einen Filterelementinnenraum umgebendes und im Filtrierbetrieb eine in Filtrierrichtung durchströmte Filterwand bildendes Filtermittel aufweisen, mit um die Mittelachse rotierbaren, winkelversetzt zueinander angeordneten Rückspülgliedern für beide Enden der Filterelemente, mit denen die Filterelemente von beiden Enden her im Rückspülbetrieb mit einem zu- oder abströmenden Fluidstrom als Reinigungsimpuls beaufschlagbar sind, und mit einem im Filterelementinnenraum der Filterelemente zwischen beiden Enden angeordneten Einbauelement, mit dem der Reinigungsimpuls im wesentlichen auf einen Filterelementabschnitt zwischen dem Einbauelement und dem an das Rückspülglied angeschlossenen Ende konzentrierbar ist. Die Erfindung betrifft auch Filterelemente für Rückspülfilter mit Rückspülgliedern, die mit einem mit einem Stützmittel abgestützten, einen Filterelementinnenraum umgebenden und im Filtrierbetrieb eine in Filtrierrichtung durchströmte Filterwand bildenden Filtermittel versehen sind, wobei das Filterelement an beiden Enden offen ist, von beiden Enden her im Rückspülbetrieb mit einem zu- oder abströmenden Fluidstrom als Reinigungsimpuls beaufschlagbar ist und im Filterelementinnenraum zwischen beiden Enden ein Einbauelement angeordnet ist, mit dem der Reinigungsimpuls im wesentlichen auf einen Filterelementabschnitt zwischen dem Einbauelement und einem der Enden konzentrierbar ist.

Ein Rückspülfilter nach dem Oberbegriff von Anspruch 1 ist aus der EP 1 225 963 A1 bekannt. Die beim gattungsgemäßen Stand der Technik eingesetzten Filterelemente weisen Einbauelemente auf, die aus in der Filterelementmitte angeordneten Kerzenteilern bestehen, die gemäß einem Ausführungsbeispiel geschlossen sind und in einem anderen Ausführungsbeispiel einen als Einschnürung ausgebildeten Durchströmkanal aufweisen, der gemäß einer vorteilhaften Ausgestaltung auch spiralförmig ausgebildet sein kann, um eine spiralförmige Durchströmung zu dem momentan im Rückspülbetrieb befindlichen Filterelementabschnitt zu erreichen.

Aus der DE 102 44 292 A1 ist es bekannt, Filterelemente für beidseitig rückspülende Rückspülfilter derart auszugestalten, dass der freie Strömungskanalquerschnitt im Filterelementinnenraum jeweils vom offenen Ende zur Filterelementmitte stetig oder kontinuierlich abnimmt, um durch die Änderung des freien Strömungskanalquerschnitts zu erreichen, dass der strömungsbedingte Druckverlust von der Filterelementöffnung zu der Filterelementmitte hin teilweise ausgeglichen wird. Durch die Verjüngung des freien Strömungskanalquerschnitts bei doppelkonischen Filterkerzen bzw. Filterkerzen mit Einbauelementen, die sich von dem einen Filterelementende zum anderen Filterelementende erstrek-

ken, soll der Anteil der Fluidmenge, der im Rückspülbetrieb durch die Filterwand strömt, hinsichtlich Druckverlust und Abnahme der Strömungsgeschwindigkeit ausgeglichen werden, um hierdurch die Strömungsgeschwindigkeit im Bereich der Filterelementmitte gegenüber hohlzylindrischen Filterkerzen zu erhöhen und das Abreinigungsverhalten der Filterwand der Filterelemente mit den Rückspülfiltern zu verbessern.

Die Erfindung betrifft auch einen Rückspülfilter zum Filtern von Fluiden, mit mehreren konzentrisch um eine Mittelachse angeordneten, an beiden Enden offenen Filterelementen, die ein mit einem Stützmittel abgestütztes, einen Filterelementinnenraum umgebendes und im Filtrierbetrieb eine in Filtrierrichtung durchströmte Filterwand bildendes Filtermittel aufweisen, mit um die Mittelachse rotierbaren, winkelversetzt zueinander angeordneten Rückspülgliedern für beide Enden der Filterelemente, mit denen die Filterelemente von beiden Enden her im Rückspülbetrieb mit einem zu- oder abströmenden Fluidstrom als Reinigungsimpuls beaufschlagbar sind, und mit einem im Filterelementinnenraum angeordneten, durch den Reinigungsimpuls hin- und herbewegbaren Reinigungskörper gemäß dem Oberbegriff von Anspruch 21. Die Erfindung betrifft auch Filterelemente für diese Rückspülfilter, mit einem mit einem Stützmittel abgestützten, einen Filterelementinnenraum umgebenden und im Filtrierbetrieb eine in Filtrierrichtung durchströmte Filterwand bildenden Filtermittel, wobei das Filterelement an beiden Enden offen ist, von beiden Enden her im Rückspülbetrieb mit einem zu- oder abströmenden Fluidstrom als Reinigungsimpuls beaufschlagbar ist und im Filterelementinnenraum ein durch den Reinigungsimpuls hin- und herbewegbarer Reinigungskörper angeordnet ist.

Ein Filterelement zur Verwendung in einem Rückspülfilter nach dem Oberbegriff von Anspruch 21 ist aus der DE 102 44 660 A1 bekannt. Geeignete Rückspülfilter für die mit einem Reinigungskörper versehenen Filterkerzen sind aus der DE 100 24 401 A2 oder DE 100 24 402 C2 bekannt. Durch das zeitversetzte, wechselweise und gegensinnige Rückspülen der an beiden Enden offenen Filterkerzen mittels rotierbarer Spülglieder kann eine effektive Rückspülung der Filterwand im Rückspülbetrieb entgegengesetzt zur Filtrierrichtung bewirkt werden. Mit einem zusätzlich im Filterelementinnenraum angeordneten Reinigungskörper soll das Rückspülverhalten des Rückspülfilters an den einzelnen Filterelementen zusätzlich verbessert werden, um die wartungsfrei Lebensdauer der einzelnen Filterelemente und damit des gesamten Rückspülfilters zu erhöhen. Die DE 102 44 660 A1 beschreibt als Reinigungskörper einerseits eine Kugel, die sich frei zwischen beiden Enden im Filterelementinnenraum hin- und herbewegen kann, und andererseits einen Zylinder bzw. Rotationsellipsoiden, in dessen offenem und durchströmbarem Innenraum Leitschaufeln oder eine Turbine angeordnet sein können, um den Reinigungskörper bei der Hin- und Herbewegung zusätzlich in Rotation zu versetzen. Bei den gattungsgemäßen Filterelementen soll der Reinigungskörper eine zusätzliche mechanische Abreinigung des Filtermittels an der Innenseite der Filterwand bewirken, wozu weiche Reinigungsmittel wie Borsten, Bürsten, Streifen, Abstreifer, Lippen, Kanten, Kratzer oder dgl. an der Oberfläche des Reinigungskörpers bevorzugt angebracht sind.

Aufgabe gemäß einem ersten Aspekt der Erfindung ist es, Rückspülfilter mit Filterelementen mit Einbauelementen bzw. entsprechende Filterelemente zu schaffen, deren Standzeit verbessert bzw. optimiert ist. Aufgabe gemäß einem zweiten Aspekt der Erfindung ist es, einen Rückspülfilter mit Reinigungskörper aufweisenden Filterelementen sowie entsprechende Filterelemente zu schaffen, die ein noch besseres Reinigungsverhalten und damit eine längere Lebensdauer aufweisen als die aus dem Stand der Technik bekannten Rückspülfilter bzw. Filterelemente.

Die Aufgabe gemäß dem ersten Aspekt wird erfindungsgemäß nach Anspruch 1 dadurch gelöst, dass die Einbauelemente einen Strömungsleitkörper in der Filterelementmitte bilden, wobei zwischen dem Strömungsleitkörper und der Filterwand wenigstens ein Durchlass ausgebildet ist, der im Rückspülbetrieb im Bereich der Filterelementmitte eine entlang der Filterwand gerichtete und diese zusätzlich im Querstrom abreinigende Reinigungsströmung durchlässt. Bei den erfindungsgemäßen und als Strömungsleitkörper ausgebildeten Einbauelementen mit wenigstens einem radial um den Strömungsleitkörper herum ausgebildeten Durchlass wird im Rückspülbetrieb ausgenutzt, dass durch die Zweiteilung des Filterelementes mit dem Einbauelement die Intensität des Rückspülstroms auf den jeweils im Rückspülbetrieb befindlichen Filterelementabschnitt konzentriert wird. Durch die Anordnung der Durchlässe zwischen Strömungsleitkörper und Filterwand wird jedoch gleichzeitig erreicht, dass die Reinigungsströmung an denjenigen Flächen ihre Wirkung entfaltet, die im Rückspülbetrieb abzureinigen sind, nämlich im Bereich der Filterwand. Die im bzw. mit dem Durchlass ausgebildete Reinigungsströmung bewirkt eine turbulente Querströmung hoher Geschwindigkeit, mit der die Filterwand im Bereich der Filterelementmitte besonders intensiv im Querstrom abgereinigt wird, wodurch sich insgesamt das Abreinigungsverhalten der Filterkerze über die gesamte Länge verbessert. Hierdurch wird die Standzeit eines Filterelementes und damit die wartungsfreie Standzeit des gesamten Rückspülfilters signifikant verbessert. Die durch den wenigstens einen Durchlass hindurchtretende Reinigungsströmung ist partiell auf die Filterelementmitte sowie den im Rückspülbetrieb befindlichen Filterelementabschnitt, welcher unmittelbar an die Filterelementmitte bzw. das Einbauelement angrenzt, beschränkt, wodurch eine besonders intensive Reinigungsströmung erzeugt wird.

Gemäß einer bevorzugten Ausgestaltung hat der Strömungsleitkörper eine Länge, die wesentlich kleiner ist als die Länge des Filterelementes, um nur im Bereich der Filterelementmitte die Reinigungsströmung lokal zu erzeugen. Die Länge ist vorzugsweise kleiner als 10 % der Gesamtlänge des Filterelementes, damit der Strömungsleitkörper eine gerichtete Reinigungsströmung ausschließlich im Bereich der Filterelementmitte erzeugt. Der Strömungsleitkörper kann auch weniger als 20 % der Gesamtlänge ausmachen.

Gemäß einer vorteilhaften Ausgestaltung ist der Rückspülfilter mit einem strömungsgünstig geformten Strömungsleitkörper versehen. Der Strömungsleitkörper kann einen Mittelteil und jeweils einen den offenen Enden zugewandten Endteil aufweisen, wobei sich die Umfangswand des Strömungsleitkörper vom Mittelteil zu den Stirnseiten der Endteile vorzugsweise kontinuierlich verjüngt. Der Strömungsleitkörper kann bei dieser Ausgestaltung insbesondere als Doppelkonus mit relativ kurzer Länge und vorzugsweise flachen, fluidisch geschlossenen Endseiten ausgebildet sein, um, wie weiter oben bereits erwähnt, die Reinigungsströmung entlang der Filterwand gerichtet zu führen. Die Endseiten können auch mit Vertiefungen, Sacklöchern od.dgl. versehen sein. Der Doppelkonus kann auch aus einem zusammengesetzten Tiefziehteil oder Spritzgußteil od.dgl. mit dünnen Wandstärken bestehen, der nur am Umfang eine gerichtete Reinigungsströmung passieren lässt.

Gemäß einer vorteilhaften Ausgestaltung kann der Strömungsleitkörper unbeweglich in der Filterelementmitte angeordnet sein. Insbesondere bei einem strömungsgünstig geformten Strömungsleitkörper mit Mittelteil und konischen Endteilen kann dann der Mittelteil an seinem Umfang mit Abflachungen versehen sein, die im Montagezustand des Strömungsleitkörpers die Durchlässe bilden. Als besonders vorteilhaft können sich etwa fünf bis acht Abflachungen erweisen, um bezogen auf den Umfang nur geringe Toträume zu erhalten, an denen sich die Reinigungsströmung durch die Durchlässe hindurch nicht vollständig auswirkt. Der Bereich zwischen den Abflachungen bietet sich dann besonders vorteilhaft zur Befestigung des Einbauelementes an der Filterwand an und bei geeigneter Materialwahl kann der Mittelteil beispielsweise an der Filterwand angeheftet oder angeklebt sein.

Gemäß einer weiteren erfindungsgemäßen Ausführungsform kann der Strömungsleitkörper an einem z.B. in der Mitte aufgetrennten Filterelement angeordnet sein und aus zwei Teilkörpern, vorzugsweise zwei Tiefziehteilen od.dgl. zusammengesetzt sein, die jeweils einen parallel zur Filterwand verlaufenden zylindrischen Mittelabschnitt und einen sich hieran anschließenden, vorzugsweise konisch zu den Enden sich verjüngenden Endabschnitt aufweisen, wobei am Mittelabschnitt ein umlaufender Kragen anschließt, der umfangsverteilt mit Schlitzen als Durchlässe versehen ist. Die fluidisch geschlossenen Endseiten der Endabschnitte können flach oder auch mit Vertiefungen, Sacklöchern od.dgl. versehen sein. Besonders vorteilhaft durchgreift dann der Kragen die Filterwand an der Trennstelle und ist am Außenumfang der Filterwand befestigt. Ein derartiger, aus Tiefziehteilen mit vorzugsweise dünner Wandstärke zusammengesetzter Strömungsleitkörper lässt sich kostengünstig herstellen und relativ einfach befestigen. Die Mittel- und Endabschnitte lenken die durch die Schlitze im Kragen hindurchtretende Reinigungsströmung parallel zur Filterwand.

Weiter alternativ kann zwischen dem Strömungsleitkörper und der Innenseite der Filterwand auch ein umlaufender Ringspalt ausgebildet sein. Dies hat den Vorteil, dass keine Toträume entstehen und damit die Reinigungsströmung im Rückspülbetrieb eine gleichmäßige Abreinigung der gesamten Filterwand im Bereich der Filterelementmitte bewirkt. Gemäß einer vorteilhaften Ausgestaltung kann der Strömungsleitkörper drehbar in der Filterelementmitte angeordnet sein. Um eine Drehbewegung in den Strömungsleitkörper einzuleiten, ist insbesondere vorteilhaft, wenn der Strömungsleitkörper an seinem Umfang mit schräg zur Mittelachse ausgerichteten Nuten oder einer Wendel versehen ist. Strömt dann die Reinigungsströmung durch die Nuten, wird der Strömungsleitkörper in Drehung versetzt, sodass zusätzlich zu der im Ringspalt entstehenden Reinigungsspaltströmung noch ein wechselnder Impuls erzeugt wird, der einen zusätzlichen Abreinigungseffekt an der Filterwand bewirkt. Der Strömungsleitkörper kann hierzu insbesondere an einer Welle oder Stange drehbar gelagert sein, die an wenigstens einem der Enden der Filterkerzen abgestützt ist.

Gemäß einer weiteren Ausgestaltung kann der Strömungsleitkörper mehrere Durchlässe aufweisen, die mit einem Verschlusskörper teilweise und wechselweise verschließbar sind. Bei der Ausgestaltung mit Strömungsleitkörper und Verschlusskörper ist besonders vorteilhaft, wenn diese relativ zu einander beweglich sind. Der Verschlusskörper kann beispielsweise aus einem rotierenden Element mit einer oder mehreren Längsnuten oder einer Segmentaussparung oder dergleichen bestehen, die bei der Rotation die über den Strömungsleitkörper umfangsverteilt angeordneten Durchlässe nacheinander freigibt, um hierdurch eine sich ständig ändernde Reinigungsströmung durch die Durchlässe zu erreichen. Bei einer besonders vorteilhaften Ausführungsform kann dabei der Verschlusskörper eine Kugel sein, die beweglich in der Aufnahme eines den Strömungsleitkörper bildenden Aufnahmekäfigs angeordnet ist. Der Aufnahmekäfig kann hierzu beispielsweise aus zwei Kappen mit jeweils einem Boden, einer umlaufenden Seitenwand und einem umlaufenden Befestigungskragen bestehen, wobei die Seitenwand sich zum Boden hin konisch verjüngt und auf wenigstens einem Kreis umfangsverteilt mit einer Vielzahl vorzugsweise gleichmäßig beabstandeter Löcher als Durchlässe versehen ist. Durch die vorzugsweise träge und langsame Bewegung der Kugel kann eine pulsierende Reinigungsströmung erzeugt werden, deren Richtung und Geschwindigkeit sich ständig ändert. Durch den kurzfristigen Pulsstrom der auf die Filterwand gerichteten Reinigungsströmung wird die Abreinigung gegenüber einem rein statischen Einbauelement nochmals signifikant verbessert. Um eine besonders intensive Reinigungsströmung bei der Ausgestaltung des Aufnahmekäfigs oder -körpers mit Kappen zu erreichen, ist besonders vorteilhaft, wenn die Löcher in beiden Kappen fluchtend zu einander ausgerichtet sind.

Bei sämtlichen Ausführungsbeispielen ist besonders vorteilhaft, wenn das Filterelement bzw. dessen Filtermittel als Spaltsieb ausgeführt ist. Das Filtermittel kann jedoch auch aus einem Filtergewebe od.dgl. bestehen. Ferner ist besonders vorteilhaft, wenn die Rückspülglieder an einer vorzugsweise mit Umgebungsdruck beaufschlagbaren Schmutzabzugsleitung angeschlossen sind, sodass die Abreinigung im Rückspülbetrieb mit einem abströmenden Fluidstrom als Reinigungsimpuls erfolgt.

Die Aufgabe gemäß dem zweiten Aspekt der Erfindung wird beim Rückspülfilter gemäß Anspruch 21 sowie beim Filterelement gemäß Anspruch 26 dadurch gelöst, daß der Bewegungsweg des Reinigungskörpers im Filterelement zwischen beiden Enden mittels Anschlägen begrenzt ist, die mit Abstand von den Enden am Filterelement ausgebildet sind, wobei zwischen einer Umfangswand des Reinigungskörpers und einer Innenseite der Filterwand ein Ringspalt für eine Reinigungsspaltströmung vorgesehen ist. Mit dem aufgrund der Anschläge nur begrenzt zwischen beiden Enden hin- und herbeweglichen Reinigungskörper sowie dem Ringspalt zwischen der Umfangswand des Reinigungskörpers und der Innenseite der Filterwand kann eine deutliche Erhöhung der Rückspülwirkung erreicht werden, da durch die Bewegung des Reinigungskörpers in Kombination mit dem erfindungsgemäß ausgebildeten Ringspalt eine in der Regel hochgradig turbulente Querströmung erzielt wird, die das Abreinigungsverhalten im Rückspülbetrieb erheblich verbessert. Die Bewegung des Reinigungskörpers entsteht ausschließlich als Reaktion auf den Reinigungsimpuls und den im Rückspülbetrieb eines bestimmten Filterelementes bestehenden Druckunterschied zwischen beiden Filterenden sowie dem Umgebungsraum und dem Filterelementinnenraum. Bei der Bewegung des Reinigungskörpers entsteht im Ringspalt eine Reinigungsspaltströmung mit hoher Geschwindigkeit, die unmittelbar an der Filterwand bzw. der Filterfläche des Filtermittels wirkt und sich aufgrund der Bewegung des Reinigungskörpers entlang der gesamten Bewegungsbahn des Reinigungskörpers kurzfristig auswirkt und somit die Filterwand lokal besonders effektiv abreinigt. Ein zusätzlicher Reinigungseffekt wird vorzugsweise noch durch das Anschlagen bzw. Abbremsen des Reinigungskörpers an den jeweiligen Anschlägen, mit denen der Bewegungsweg begrenzt ist, erreicht, da dieses plötzliche Abbremsen des Reinigungskörpers dazu führt, daß sich die im Rückspülbetrieb mit hoher Geschwindigkeit aus dem Filterelementinnenraum herausbewegende Flüssigkeitssäule von dem Reinigungskörper löst und hierdurch im Umgebungsbereich des Reinigungskörpers für einen zusätzlichen Unterdruck sorgt, der einen zusätzlichen Abreinigungsimpuls bewirkt. Dieser zusätzliche, durch die Abbremsung bewirkte Abreinigungsimpuls induziert einen zusätzlichen Fluidstrom in dem Filterelementinnenraum, welcher die Reinigungswirkung des Rückspülprozesses im Gegenstrom zur Filtrierrichtung nochmals verstärkt.

Sowohl beim erfindungsgemäßen Konzept mit Einbauelement als auch beim erfindungsgemäßen Konzept mit beweglichem Reinigungskörper wird eine Reinigungsspaltströmung gezielt zwischen dem Einbauelement bzw. Reinigungskörper und der Filterwand erzeugt, um die Rückspülwirkung mittels einer turbulenten, entlang der Innenwand gerichteten Querströmung zu erhöhen.

Beim Rückspülfilter mit beweglichem Reinigungskörper ist - wie an sich bekannt - besonders vorteilhaft, wenn die Filterelemente auf unterschiedlichen Kreisen angeordnet sind und jedem Kreis an jedem Ende eines Filterelementes ein rotierbares Rückspülglied zugeordnet ist. Weiter vorzugsweise sind die Rückspülglieder an eine vorzugsweise mit Umgebungsdruck beaufschlagbare Schmutzabzugsleitung angeschlossen. Bei dieser bevorzugten Ausgestaltung werden die Filterwände der Filterelemente im Filtrierbetrieb von Innen nach Außen durchströmt und im Rückspülbetrieb wird mit einem abströmenden Fluidstrom Filtrat im Gegenstrom zur Filtrierrichtung zum Lösen der an der Innenseite des Filterelementes anhaftenden Schmutzpartikel von Außen nach Innen durch die Filterwand hindurchgezogen. Gleichzeitig stellt sich an der Innenseite eine Abreinigung im Querstrom aufgrund des abströmenden Fluids sowie der Reinigungsspaltströmung ein, die zusammen eine intensive Abreinigung der Filterelementinnenseite von den zuvor im Filtrierbetrieb ausgefilterten Schmutzpartikeln bewirken. Die Wirkung der Spülströmung ist jeweils auf einen Abschnitt des Filterelementes beschränkt, wobei sich dieser Abschnitt aufgrund der Bewegung des Reinigungskörpers ändert.

Die Bewegungsbahn des Reinigungskörpers ist aufgrund der Anschläge kleiner als die Gesamtlänge des Filterelementes. Mit dieser Maßnahme wird zum einen berücksichtigt, daß ohnehin im Bereich der Enden, mithin im Bereich der Ausströmöffnungen, die abströmende Flüssigkeitssäule eine hohe Geschwindigkeit hat, die in Kombination mit dem einströmenden Filtrat eine hohe Abreinigung der verschmutzten Filterwandseite bewirken. Diese Maßnahme sorgt jedoch zugleich, daß sich der weiter oben beschriebene zusätzliche Abreinigungsimpuls beim Anschlagen des Reinigungskörpers am Anschlag in demjenigen Bereich entfaltet, der normalerweise nicht so stark im Rückspülbetrieb gereinigt wird wie die Filterwand nahe der Enden. Die den entgegengesetzten Enden zugeordneten Rückspülglieder können beinahe beliebig und beispielsweise um 90° oder 180° versetzt zueinander angeordnet sein. Gemäß einer besonders vorteilhaften Ausgestaltung sind das Rückspülglied für das eine Ende eines Filterelementes und das Rückspülglied für das andere Ende dieses Filterelementes derart angeordnet, daß die Enden im Prinzip unmittelbar nacheinander mit dem gegensinnigen Rückspülimpuls beaufschlagt sind, wodurch der Reinigungskörper zumindest beim zweiten Rückspül- bzw. Reinigungsimpuls von dem einen zum anderen Anschlag bewegt wird und die Reinigungsspaltströmung sich somit entlang der gesamten Bewegungsbahn entfaltet. Ein optimales Rückspülverhalten stellt sich ein, wenn zu einem bestimmten Zeitpunkt nur eine einzige Filterkerze oder ein bis zwei Filterkerzen gleichzeitig rückgespült werden.

Gemäß einer besonders vorteilhaften Ausgestaltung des Rückspülfilters bzw. der Filterelemente mit bewegbarem Reinigungskörper wird der Abstand der Anschläge von den Enden in Abhängigkeit von der freien Ausströmfläche an den Enden und der Filterfeinheit des Filtermittels bestimmt. Die freie Ausströmfläche korreliert hierzu mit dem freien Durchmesser der Öffnung am jeweiligen Ende. Gleichzeitig hat jede Filterwand eine von der Filterfeinheit des verwendeten Filtermittels, dem Durchmesser der Filterwand und der Länge des Filterelementes abhängige freie Filtersiebfläche. Gemäß einer besonders vorteilhaften erfindungsgemäßen Ausgestaltung ist der Abstand des Anschlags vom zugehörigen Ende derart bemessen, daß die zwischen dem Anschlag und dem Ende verbleibende freie Siebfläche gleich oder größer ist als die Ausströmfläche am jeweiligen Ende. Die Filtereinheit des verwendeten Filtermittels bestimmt dann zusammen mit dem Durchmesser der Enden den Abstand der Anschläge von den Enden.

In einer ersten Näherung können beide Anschläge derart angeordnet sein, daß die Bewegungsbahn des Reinigungskörpers auf etwa 1/3 bis 3/5 der Länge des Filterelementes begrenzt ist. Bei bestimmten Filterfeinheiten kann jedoch auch ein kürzerer Bewegungsweg gegebenenfalls ausreichend sein. Da der Reinigungskörper jeweils an Anschlägen anschlägt und da er durch den Reinigungsimpuls hin- und herbewegt werden soll, ist besonders vorteilhaft, wenn der Reinigungskörper aus einem Kunststoffteil oder aus Gummi besteht bzw. zumindest an solchen Flächen, die mit den Anschlägen zusammenwirken, Gummieinlagen oder dgl. hat.

Um den Reinigungskörper entlang der Bewegungsbahn mit ausreichend hoher Geschwindigkeit zum Erzielen einer günstigen und effektiven Reinigungsspaltströmung zu bewegen, ist besonders vorteilhaft, wenn der Reinigungskörper strömungsgünstig ausgebildet ist. Gemäß einer vorteilhaften Ausgestaltung kann der Reinigungskörper einen Mittelteil und jeweils einen den offenen Enden zugewandten Endteil aufweisen, wobei die Umfangswand sich vom Mittelteil zu den Stirnseiten der Endteile vorzugsweise kontinuierlich verjüngt. In einfachster Ausgestaltung kann der Reinigungskörper als Doppelkonus ausgebildet sein. Hierbei kann der Reinigungskörper rotationssymmetrisch ausgebildet sein. Die konisch zu den Stirnseiten sich verjüngende Umfangswand beeinflusst im Rückspülbetrieb die Strömungsrichtung der im Wirkungsbereich des Reinigungskörpers durch die Filterwand hindurchtretenden Strömung. Die fluidisch geschlossenen, keine Strömung durchlassenden Endseiten des Reinigungskörpers können flach ausgeführt sein. Die Endseiten können auch mit Vertiefungen, Sacklöchern od.dgl. versehen sein. Der Doppelkonus kann auch aus einem zusammengesetzten Tiefziehteil oder Spritzgußteil od.dgl. mit dünnen Wandstärken bestehen, der nur am Umfang eine gerichtete Reinigungsströmung passieren lässt.

Der Reinigungskörper kann zumindest in der Umfangswand des Mittelteils mit Nuten versehen sein. Die Umfangswand des Reinigungskörpers kann auch polygonförmig ausgebildet sein. Besonders vorteilhaft ist es, wenn die Nuten schräg zur Bewegungsrichtung ausgerichtet sind und/oder sich bis in eine breite Basis der jeweiligen Endteile erstrecken. Insbesondere mit den schräg verlaufenden Nuten kann der Reinigungskörper bei der Bewegung entlang der Bewegungsbahn zusätzlich in Rotation versetzt werden, um ein gleichmäßiges Reinigungsverhalten entlang des Bewegungsweges zu erreichen. Die Rotation kann sich insbesondere bei polygonförmigem Querschnitt eines Reinigungskörpers als besonders vorteilhaft erweisen.

Die Anschläge, mit denen der Bewegungsweg des Reinigungskörpers begrenzt ist, können an der Innenseite der Filterwand, des Filtermittels oder des Stützmittels ausgebildet sein. Diese Ausgestaltung ist insbesondere vorteilhaft, wenn sich der Reinigungskörper frei, d.h. ohne Führung, zwischen den beiden Anschlägen hin- und herbewegen kann. Gemäß einer besonderen Ausgestaltung können die Anschläge dann bei Anliegen des Reinigungskörpers eine Abdichtung des Ringspaltes bewirken, um den vorgenannten Zusatzeffekt des durch Unterdruck induzierten Abreinigungsimpulses noch zu verstärken.

Gemäß einer alternativen vorteilhaften Ausgestaltung kann der Reinigungskörper an einem Führungselement geführt sein. Durch Führung des Reinigungskörpers an einem Führungselement kann sichergestellt werden, daß sich der Ringspalt entlang der gesamten Bewegungsbahn gleichmäßig um die Umfangswand des Reinigungskörpers herum zwischen Reinigungskörper und Filterwand ausbildet. Damit wird gleichzeitig auch eine gleichmäßige Abreinigung durch die Reinigungsspaltströmung erreicht. Das Führungselement kann insbesondere eine zentral im Filterelementinnenraum angeordnete Führungsstange umfassen, an der sich dann der Reinigungskörper beispielsweise mit einer zentrischen Führungsbuchse oder dgl. führt. Das Führungselement kann zusätzlich mit einer Wendel versehen sein, mit welcher der Reinigungskörper in Rotation versetzbar ist.

Ein bevorzugtes Anwendungsgebiet der Erfindung mit bewegbarem Reinigungskörper betrifft Filterelemente, bei denen die Filterwand als Spaltsiebfilter bzw. Spaltfilter ausgeführt ist. Bei Spaltfiltern, Spaltsieben bzw. Spaltsiebfiltern werden Profilstäbe stabweise parallel zueinander angeordnet und mit einem quer verlaufenden Stützmittel verstärkt, wobei die Spaltabstände zwischen den Profilstäben die Filterfeinheit des Spaltsiebs bestimmen, oder ein Profildraht wird um ein von Längsstäben gebildetes Stützmittel herum in gleichmäßigen Windungen gewickelt, um wiederum mit den Spaltabständen zwischen den Profildrähten die Filterfeinheit des Spaltsiebs zu bestimmen. Das Filtermittel kann jedoch auch aus einem Filtergewebe od.dgl. bestehen.

Weitere Vorteile und Ausgestaltungen eines erfindungsgemäßen Rückspülfilters mit Filterkerzen mit Einbauelementen oder mit bewegbarem Reinigungskörper ergeben sich aus der nachfolgenden Beschreibung von schematisch in der Zeichnung gezeigten Ausführungsbeispielen. In der Zeichnung zeigen:

Fig. 1    schematisch einen erfindungsgemäßen Rückspülfilter mit Einbauelementen aufweisenden Filterelementen gemäß einem ersten Ausführungsbeispiel;

Fig. 2    eine Ansicht auf die Außenseite eines beim Ausführungsbeispiel gemäß Fig. 1 verwendeten Filterelementes;

Fig. 3    eine Detailansicht des Strömungsleitkörpers des Filterelementes aus Fig. 2;

Fig. 4    eine Detailansicht eines Filterelementes gemäß einem zweiten Ausführungsbeispiel mit in der Filterelementmitte angeordnetem, drehbaren Strömungsleitkörper;

Fig. 5    eine Schnittansicht entlang v-v in Fig. 4;

Fig. 6    einen Längsschnitt durch ein Filterelement gemäß einem dritten Ausführungsbeispiel;

Fig. 7    eine Schnittansicht entlang VII-VII in Fig. 6;

Fig. 8    die Filterelementmitte eines Filterelementes mit einem Strömungsleitkörper gemäß einem vierten Ausführungsbeispiel;

Fig. 9    eine Schnittansicht entlang IX-IX in Fig. 8.

Fig. 10    einen erfindungsgemäßen Rückspülfilter mit Filterelementen mit bewegbarem Reinigungskörper gemäß einem ersten Ausführungsbeispiel im Vertikalschnitt;

Fig. 11    ein beim Rückspülfilter gem. Fig. 10 verwendetes Filterelement im Längsschnitt;

Fig. 12    eine Detailansicht des beim Filterelement gem. Fig. 11 verwendeten Reinigungskörpers;

Fig. 13    eine Schnittansicht entlang XIII-XIII in Fig. 12;

Fig. 14    ein Filterelement mit beweglichem Reinigungskörper gem. einem zweiten Ausführungsbeispiel; und

**Fig. 15**    in perspektivischer Darstellung, teilweise aufgebrochen, den beim Filterelement gem. Fig. 14 verwendeten Reinigungskörper.

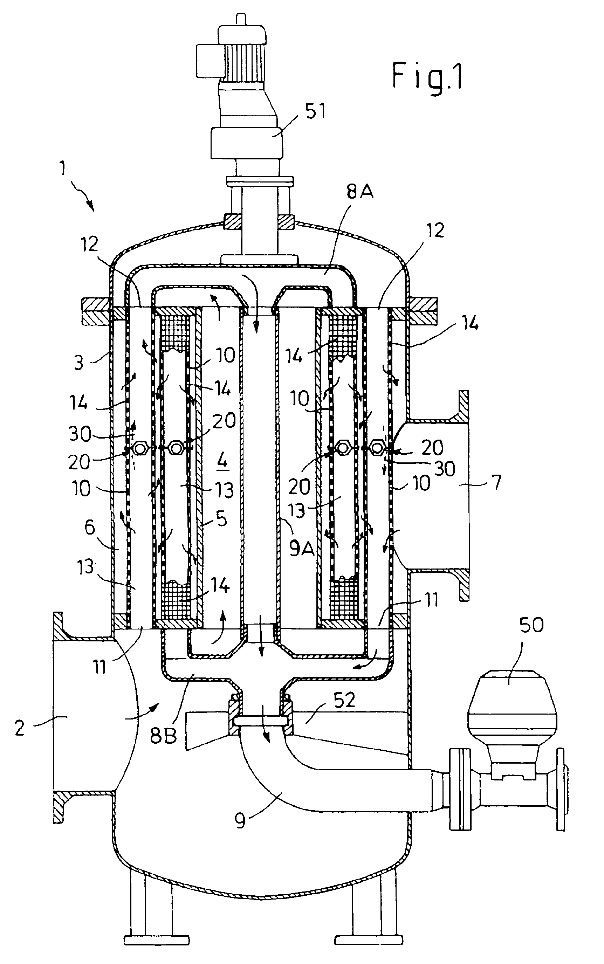

In Figur 1 ist insgesamt mit Bezugszeichen 1 ein erfindungsgemäßer Rückspülfilter zum Filtern eines über einen Filtereinlass 2 in ein Filtergehäuse 3 des Rückspülfilters einströmenden und mit Verunreinigungen versehenen Fluids dargestellt. Bei dem Fluid kann es sich vorzugsweise um Wasser, aber auch um Öl, Benzin oder einen anderen Schmierstoff oder Brennstoff handeln. Zur Filtrierung bzw. Reinigung des einströmenden Fluids sind im Filtergehäuse 3 eine Vielzahl von Filterkerzen 10 angeordnet, wobei die einzelnen Filterkerzen 10 konzentrisch um eine Achse, die ggf. die Mittelachse des Filters 1 bildet, angeordnet sind und hierbei auf Umfangskreisen mit hier zwei unterschiedlichen Durchmessern angeordnet sind. Sämtliche Filterkerzen 10 sind an ihrem oberen Ende 12 und an ihrem unteren Ende 11 offen, damit das über den Filtereinlass 2 einströmende Fluid jeweils über die beiden Enden 11, 12 in den Filterelementinnenraum 13 eintreten kann und im Filtrierbetrieb, wie für die beiden auf dem inneren Kreis liegenden Filterkerzen 10, für die untere Hälfte des linken äußeren Filterelementes 10 und die obere Hälfte des rechten Filterelementes 10 mit den Pfeilen dargestellt, durch die Filterwand 14 hindurchtreten kann und als gefiltertes Filtrat aus dem Filtratauslass 7 austreten kann. Im gezeigten Ausführungsbeispiel sind sämtliche Filterkerzen 10 Bestandteil eines Filtereinsatzes mit einem im Zentrum angeordneten Strömungskanal 4, der durch eine zylindrische Kanalwand 5 von einem Filtratraum 6 getrennt ist. Ein nach der Filtrierung an der Filterwand 14 ausgefiltertes und in den Filtratraum 6 eintretendes Filtrat strömt über den Filtratauslass 7 einem weiteren Verbraucher zu. Um den Filtratraum 6 jeweils von der Schmutzseite zu trennen, umfasst der die Filterelemente bzw. Filterkerzen 10 aufnehmende Filtereinsatz jeweils am oberen und am unteren Ende eine Kopfplatte mit Aussparungen für die Enden 11, 12 der Filterelemente 10.

Die den Filterelementinnenraum 13 jedes Filterelementes 10 umgebende Filterwand 14 bildet das Filtermittel, an dessen Innenseite die im Filtrierbetrieb ausgefilterten Schmutzpartikel hängen bleiben und hierdurch das Filtermittel bzw. die Filterwand 14 im Filtrierbetrieb allmählich zusetzen. Um beim Rückspülfilter 1 nach bestimmten Zeitintervallen oder bei Änderungen des Druckunterschiedes zwischen ein- und ausströmendem Fluid/Filtrat eine Reinigung der einzelnen Filterelemente 10 vornehmen zu können, ist im Filtergehäuse 3 sowohl für die oberen Enden 12 der Filterelemente 10 als auch für die unteren Enden 11 der Filterelemente 10 jeweils ein Rückspülglied 8A bzw. 8B angeordnet. Jedes Rückspülglied 8A, 8B weist einen ersten Teilarm für die auf dem äußeren Kreis angeordneten Filterelemente 10 und einen zweiten Teilarm für die auf dem inneren Kreis angeordneten Filterelemente 10 auf. Die beiden Rückspülglieder 8A, 8B sind drehfest über einen den Filtereinsatz durchgreifenden Rohrabschnitt 9A miteinander verbunden und auf nicht gezeigte Weise mit einem Motor 51 gekoppelt, der intervallweise betätigt wird, um die Rückspülglieder 8A, 8B gemeinsam zu drehen. Die beiden Rückspülglieder 8A, 8B sind dabei derart versetzt zueinander angeordnet, dass zu einem Zeitpunkt, an dem die Teilarme des oberen Rückspülglieds 8A an die einen Enden 12 bestimmter Filterkerzen 10 angeschlossen sind, die anderen Enden 11 dieser Filterkerzen 10 offen sind. Umgekehrt sind die oberen Enden 12 solcher Filterkerzen 10 offen, bei denen sich gerade die Arme des unteren Rückspülglieds 8B vor den unteren Enden 11 befinden. Das untere Rückspülglied 8B ist in einem am Gehäuse 3 auf Höhe des Filtrateinlasses 2 abgestützten Drehlager 52 abgestützt, wobei der Innenraum des unteren Rückspülgliedes 8B, der Innenraum der Drehwelle 9A und der Innenraum des oberen Rückspülglieds 8A an eine gemeinsame Schmutzabzugsleitung 9 angeschlossen sind, die an ein ansteuerbares Ablassventil 50 angeschlossen ist. Mit dem Ablassventil 50 können die Schmutzabzugsleitung 9 und damit auch die Innenräume in den beiden Rückspülgliedern 8A, 8B vorzugsweise mit Umgebungsdruck beaufschlagt werden, um für einen kurzen Moment diejenigen Filterkerzen, die gerade an die Rückspülglieder 8A, 8B angeschlossen sind, durch den Druckunterschied rückzuspülen, wie dies in der unteren Hälfte der rechten äußeren Filterkerze 10 und der oberen Hälfte der linken äußeren Filterkerze 10 dargestellt ist. Im Rückspülbetrieb, wenn Unterdruck an den Rückspülgliedern 8A, 8B und damit am Filterelementabschnitt der momentan an die Rückspülglieder 8A, 8B angeschlossenen Filterelemente 10 anliegt, strömt u. a. Filtrat vom Filtratraum 6 durch die Filterwand 14 im Gegenstrom zur Filtrierrichtung hindurch, um Schmutzpartikel an der Innenseite der Filterwand 14 zu lösen.

Zur Verbesserung der Rückspülung der Filterkerzen 10 ist, wie Fig. 1 zeigt, im Filterelementinnenraum 13 jedes Filterelementes 10 ein mit Bezugszeichen 20 bezeichnetes Einbauelement angeordnet. Die Position des Einbauelementes 20 innerhalb jeder Filterkerze 10 befindet sich im wesentlichen mittig zwischen den beiden Enden 11, 12 und diese Einbauelemente 20 bilden jeweils Strömungsleitkörper, die im Rückspülbetrieb, wie bei der linken Filterkerze für den oberen Filterelementabschnitt und bei der rechten Filterkerze für den unteren Filterelementabschnitt dargestellt, eine entlang der Filterwand 14 gerichtete Reinigungsströmung 30 durchlassen. Diese Reinigungsströmung 30 bewirkt eine zusätzliche Abreinigung der Innenseite der Filterwand 14 im Bereich der Filterelementmitte und damit im Bereich des Einbauelementes 20 im Querstrom.

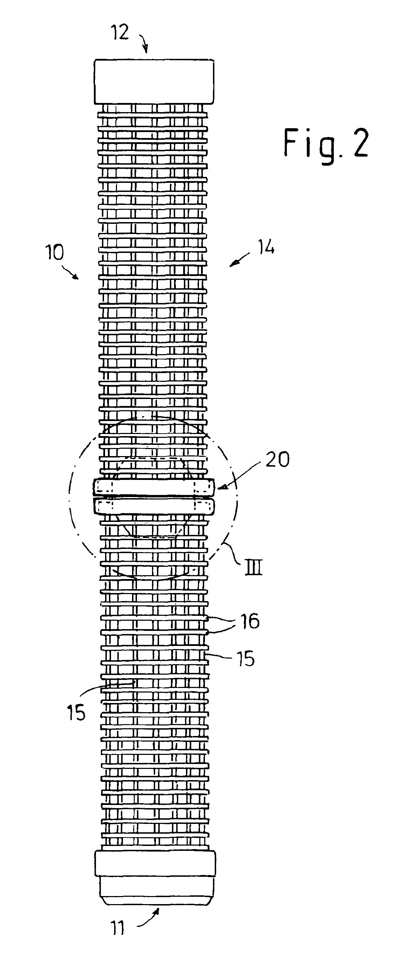

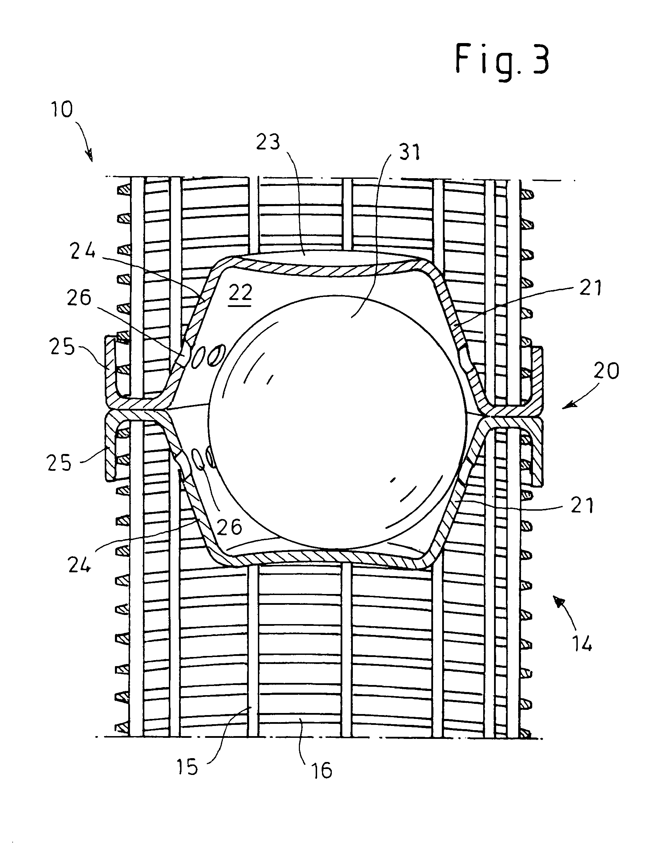

Der Aufbau der Filterelemente 10 mit einem einen Strömungsleitkörper für eine Reinigungsströmung bildenden Einbauelement 20 gemäß einem ersten Ausführungsbeispiel wird nun zuerst unter Bezugnahmen auf die Fig. 2 und 3 erläutert. Das Einbauelement 20 teilt das Filterelement 10 in zwei Filterelementabschnitte gleicher Länge. Die Filterwand 14 der Filterkerze 10 ist als Spaltsieb ausgeführt und weist umfangsverteilt mehrere sich längst zwischen den beiden Enden erstreckende Stützstäben 15 auf, die mit gleichmäßigen Windungen eines Profildrahtes 16 umwickelt sind, sodass die Abstände zwischen den Profildrähten 16 die Filterfeinheit des von der Filterwand 14 gebildeten Filtermittels bestimmen. Das die Filterkerze 10 teilende Einbauelement 20 weist, wie insbesondere Fig. 3 zeigt, zwei identisch zueinander ausgebildete und umgekehrt zueinander angeordnete Blechkappen 21 auf, die zusammen einen Aufnahmekäfig für eine im Innenraum 22 des mit den Blechkappen 21 gebildeten Aufnahmekäfigs beweglich angeordnete Kugel 31 bilden. Die beiden Blechkappen 21 weisen jeweils mittig einen zurückversetzt liegenden Boden 23 auf, der über eine schräg verlaufende und sich ausgehend vom Boden 23 erweiternde Seitenwand 24 in einen umlaufenden Befestigungskragen 25 übergeht. Mit Ausnahme umfangsverteilt angeordneter Löcher bzw. Bohrungen 26 trennt das Einbauelement 20 die beiden Filterelementabschnitte fluidisch voneinander. Jeweils zwei Bohrungen 26 liegen in Achsrichtung des Filterelementes 10 gesehen einander fluchtend gegenüber und die Kugel 31 ist derart beweglich, dass sie in bestimmten Stellungen einige Löcher 26 verschließt und andere Löcher 26 freigibt. Im Filtrierbetrieb wirken sich die Löcher 26 und das Einbauelement 20 nicht aus. Im Rückspülbetrieb hingegen bilden die Löcher 26 in den beiden Blechkappen 21, soweit sie nicht mit der Kugel 31 abgesperrt sind, Durchlässe für Fluid, sodass eine Reinigungsströmung von demjenigen Filterelementabschnitt, der sich im Filtrierbetrieb befindet, zu demjenigen Abschnitt hin, der sich im Rückspülbetrieb befindet und gerade an ein Rückspülglied angeschlossen ist, entsteht. Diese Reinigungsströmung stellt sich st aufgrund der Lage der Löcher 26 parallel zur Innenseite der Filterwand 14 gerichtet ein und bewirkt eine besonders intensive Abreinigung der Innenseiten der Profildrähte 16, an denen im Filtrierbetrieb ausgefilterte Schmutzpartikel haften. Aufgrund der gerichteten Reinigungsströmung mit dem einen Strömungsleitkörper bildenden Einbauelement 20 wird mithin eine zusätzliche Abreinigung der Filterwand 14 in der Filterelementmitte im Querstrom erreicht. Außerdem kann die Filterwand noch im Gegenstrom zur Filtrierrichtung von außen nach innen abgereinigt werden, indem im Rückspülbetrieb Filtrat durch die Filterwand 14 von außen nach innen durchtritt. Durch die Beweglichkeit der Kugel 31 entsteht hierbei jeweils eine pulsierende Reinigungsströmung, da in Abhängigkeit von der Trägheit der Kugel 31 sich diese innerhalb des Aufnahmeraums 22 bewegt und damit im wesentlichen zufallsbedingt unterschiedliche Löcher 26 freigibt, sodass auch eine unterschiedliche Reinigungsströmung an wechselnden Orten entsteht. Nur die Ausrichtung der Reinigungsströmung parallel zur Filterwand 14 ändert sich im Wesentlichen nicht. Die Richtung der Strömung wird hierbei durch den Druckunterschied zwischen dem an Umgebungsdruck angeschlossenen, im Rückspülbetrieb befindlichen Filterelementabschnitt und dem im Filtrierbetrieb befindlichen Filterelementabschnitt, in dem höherer Druck herrscht, bestimmt.

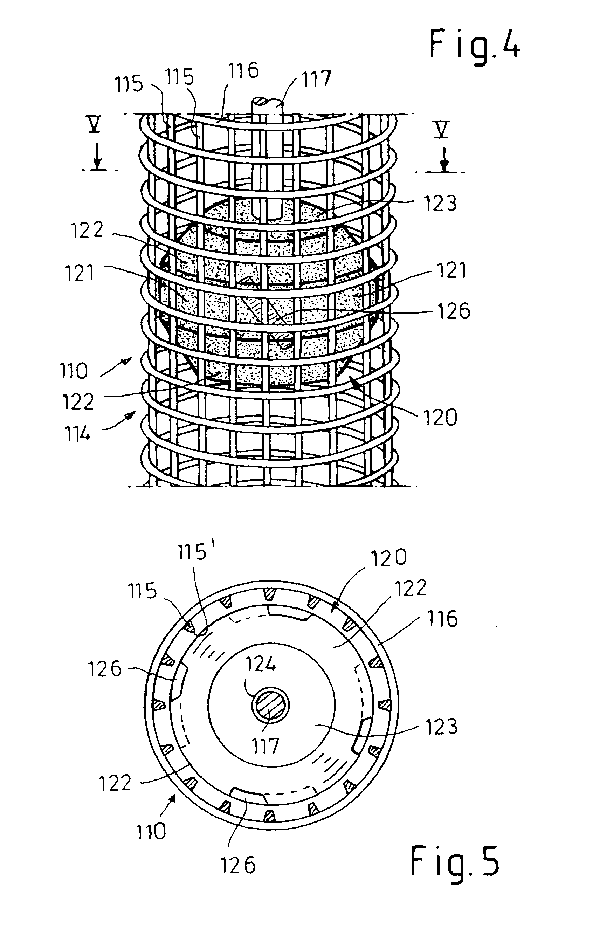

Die Fig. 4 und 5 zeigen ein zweites Ausführungsbeispiel einer nur teilweise im Mittelabschnitt dargestellten Filterkerze 110 mit einem Einbauelement 120 gemäß einem zweiten Ausführungsbeispiel. Auch beim Filterelement 110 ist die Filterwand 114 als Spaltsieb ausgeführt. Es handelt sich hier allerdings um eine Längsspaltkerze 110, bei der sich Profilstege 115, die die Filterfeinheit des Filtermittels bestimmen, in Achsrichtung der Filterkerze 110 erstrecken und das Stützgewebe außen angebracht ist und mit Windungen bzw. Stützringen eines Stützdrahtes 116 gebildet ist. Das Einbauelement 120 besteht aus einem strömungsgünstig geformten Strömungsleitkörper mit einem Mittelteil 121 sowie zwei sich an diesen anschließenden Endteilen 122, deren Umfangswand sich ausgehend von der zylindrischen Umfangswand des Mittelteils 121 konisch zu den flachen und geschlossenen Endseiten 123 der Endteile 122 verjüngt. Der Strömungsleitkörper 120 kann sich um seine Mittelachse herum drehen, da er mittels einer Stützstange 117 an wenigstens einem Ende der Filterkerze 110 abgestützt ist. Die Stützstange 117 kann beispielsweise mit einem Querstück oder T-Stück in einem der Endstücke der Filterkerze 110 verankert sein. Im Zentrum des Strömungsleitkörpers 120 ist vorzugsweise ein nicht näher dargestelltes Drehlager 124 angeordnet, das in einer Weise mit der Stützstange 117 zusammenwirkt, dass sich der Strömungsleitkörper 120 relativ zur Stützstange 117 drehen kann. Um die freie Drehbarkeit zu gewährleisten, hat die Umfangswand des Mittelteils 121 einen geringen Abstand zu den Innenseiten 115' der Profilstege 115. Außerdem ist der Mittelteil 120 mit schräg zur Drehachse des Strömungsleitkörpers 120 bzw. zur Mittelachse des Filterelementes 110 verlaufenden Nuten 126 versehen. Im Filtrierbetrieb hat der Strömungsleitkörper 120 im Wesentlichen keine Funktion. Im Rückspülbetrieb allerdings bildet der umlaufende Freiraum zwischen den Innenseiten 115' der Profilstege 115 sowie dem Mittelteil 121 des Strömungsleitkörpers 120 einen Spalt bzw. Ringspalt, durch den ein Fluidstrom von dem nicht im Rückspülbetrieb befindlichen Filterelementabschnitt als Reinigungsströmung übertreten kann, wobei diese Reinigungsströmung jeweils entlang des Mittelteils 121 des Strömungsleitkörpers 120 parallel zur Filterwand 114 bzw. hier sogar parallel zur Ausrichtung der das Filtermittel bildenden Profilstege 115 ausgerichtet ist. Der Aufbau der Umfangswand des Strömungsleitkörpers 120 insbesondere mit den beiden konisch verlaufenden Endteilen 122 zieht im Rückspülbetrieb einen Teil des Flüssigkeitsstromes geringfügig nach innen, wodurch die Reinigungswirkung an der Filterwand sowohl im Gegenstrom als auch im Querstrom nochmals verbessert wird. Gleichzeitig begrenzt der Strömungsleitkörper 120 den mit dem Rückspülglied an einem Ende der Filterkerze 110 aufgebrachten Reinigungsimpuls im Wesentlichen auf die eine Hälfte des Filterelementes 110, sodass schon die Intensität der Abreinigung der Filterwand 114 im Gegenstrom zur Filtrierrichtung erhöht ist. Die Reinigungsströmung durch den Reinigungsspalt zwischen Strömungsleitkörper 120 und der Filterwand 114, welche im Bereich des Strömungsleitkörpers 120 im wesentlichen parallel zur Filterwand 114 gerichtet wird, bewirkt zusätzlich eine turbulente Querströmung im Bereich der Filterelementmitte, durch die dort die Abreinigung der Filterwand 114 zusätzlich verbessert und erhöht wird. Im Rückspülbetrieb tritt ein Teilstrom der Reinigungsströmung durch die Nuten 126 im Mittelteil 121 hindurch. Aufgrund der schrägen Anordnung der Nuten 126 wird hierbei der Strömungsleitkörper 120 in Rotation versetzt, sodass einerseits der in den Nuten 126 geringfügig quer ausgerichtete Reinigungsstrom im Winkel auf die Filterwand 114 auftritt und andererseits verhindert wird, dass an bestimmten Stellen am Umfang des Einbauelementes 120 Toträume entstehen, die schlechter abgereinigt werden als andere Stellen.

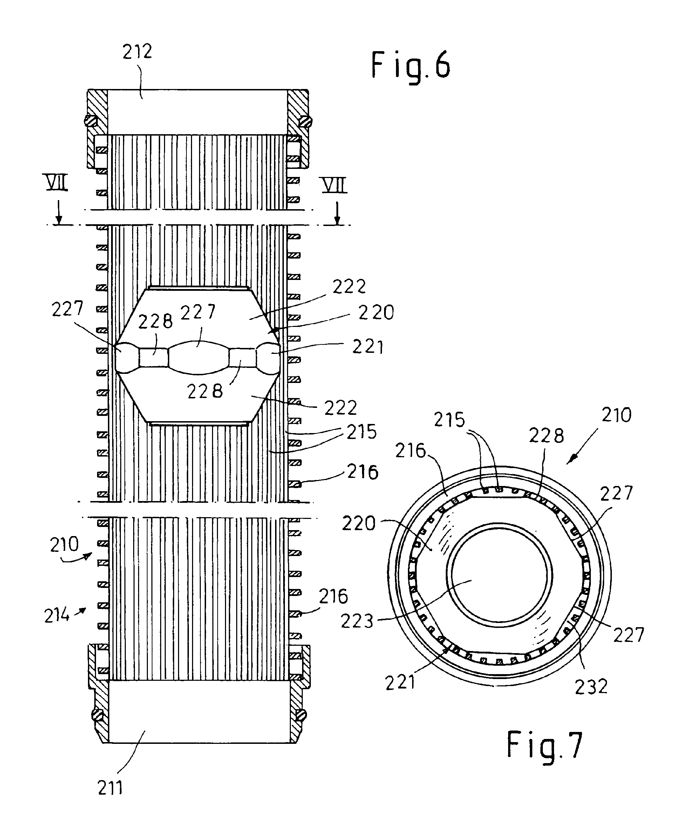

Die Fig. 6 und 7 schließlich zeigen ein drittes Ausführungsbeispiel für eine Filterkerze 210 mit einem einen Strömungsleitkörper bildenden Einbauelement 220. Der Strömungsleitkörper 120 teilt das Filterelement 210 mittig und hat im Wesentlichen den gleichen Aufbau wie beim Ausführungsbeispiel in den Fig. 3 und 4 mit einem Mittelteil 221 und zwei sich konisch nach oben bzw. nach unten hin verjüngenden Endteilen 222. Im Gegensatz zum vorherigen Ausführungsbeispiel ist jedoch der Strömungsleitkörper 220 fest in der Filterelementmitte montiert. Auch beim Filterelement 210 ist die Filterwand 214 als Spaltsieb mit einer Vielzahl von die Filterfeinheit bestimmenden und längs zwischen den beiden offenen Filterenden 211, 212 verlaufenden Profilstäben 215 ausgeführt, die mit einem Stützdraht 216 außen umwickelt sind und zur Filterwand 214 versteift sind. Der Mittelteil 221 ist, wie insbesondere der Ansicht in Fig. 7 entnommen werden kann, umfangsverteilt in gleichmäßigen Abständen mit Abflachungen 227 versehen, zwischen denen sich kurze zylindrisch gewölbte Abschnitte 228 erstrecken. Diese zylindrischen Abschnitte 228 liegen unmittelbar an den Innenseiten der Profilstäbe 215 an und sind dort beispielsweise angeheftet. Durchlässe für eine Reinigungsströmung entstehen nur an den abgeflachten Abschnitten 227 des Strömungsteilers 220. Der gezeigte Mittelteil 221 hat hier sechs Abflachungen 227 und bewirkt mithin hier sechs Durchlässe, die in Fig. 7 mit Bezugszeichen 232 versehen sind. Im Rückspülbetrieb wird der Reinigungsimpuls aufgrund des an den Endflächen 223 geschlossenen Strömungsleitkörpers 220 im Wesentlichen auf den im Rückspülbetrieb befindlichen Filterelementabschnitt begrenzt. Die Reinigung der Filterwand 214 erfolgt an den meisten Zonen und insbesondere in der Nähe des an das Rückspülglied angeschlossenen Endes im Gegenstrom zur Filtrierrichtung. Durch die Durchlässe 232 tritt jedoch gleichzeitig eine Reinigungsströmung durch, die im Wesentlichen parallel zur Filterwand 214 gerichtet ist und die Filterwand zusätzlich im Bereich der Filterelementmitte im Querstrom abreinigt.

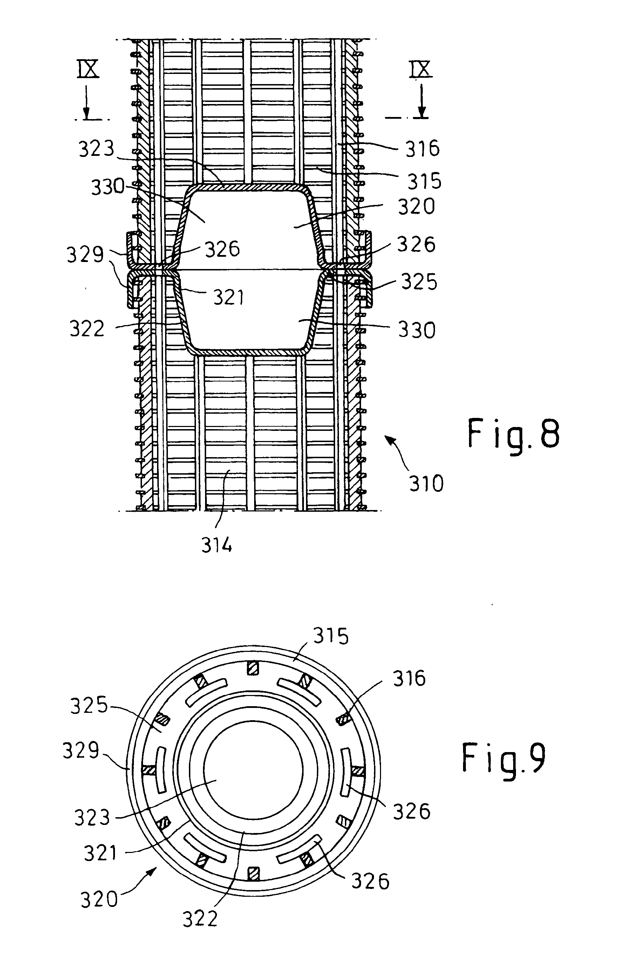

Die Figuren 8 und 9 zeigen ein viertes Ausführungsbeispiel für eine erfindungsgemäße Filterkerze 310. Die Filterwand 314 der Filterkerze ist als Radialspaltsieb mit einer geringen Anzahl sich längs zwischen den offenen Enden der Filterkerze 310 erstreckenden Stützstäben 316 und einer hohen Wicklungszahl eines Profildrahtes 315 ausgeführt. Das Filterelement 310 ist mittig aufgetrennt und in der Filterelementmitte ist ein den Strömungsleitkörper bildendes Einbauelement 320 eingebaut. Der Strömungsleitkörper 320 ist hier aus zwei zueinander identischen Tiefziehblechteilen 330 zusammengesetzt, die jeder die eine Hälfte des Strömungsleitkörpers 320 bilden. Jeder Blechteil hat einen umlaufenden, quer zur Filterelementachse verlaufenden Kragen 325, der mittig eine tiefgezogene, hutförmige Ausbuchtung mit einem an den Kragen 325 unmittelbar anschließenden, hier relativ kurzen zylindrischen Mittelabschnitt 321 mit einer parallel zur Filterwand ausgerichteten Umfangswand aufweist. An den Mittelabschnitt 321 schließt jeweils ein Endabschnitt 322 mit einer konisch sich zu den Endseiten 323 verjüngenden Umfangswand an. Im quer verlaufenden Kragen 325 sind umfangsverteilt schlitzförmige Durchlässe 326 ausgebildet, durch die im Rückspülbetrieb eine Reinigungsströmung hindurchtreten kann, die zuvor durch den End- und Mittelabschnitt 321, 322 parallel zur Filterwand 314 ausgerichtet wurde. Der Kragen 325 endet jeweils in einem nach hinten abgewinkelten Ringsteg 329, der außen an der Filterwand 314 anliegt und dort beispielsweise mit einer von außen aufgebrachten Schweißnaht fixiert werden kann.

In der bevorzugten Ausgestaltung erfolgt der Reinigungsimpuls durch abströmendes Fluid. Die Erfindung betrifft auch Rückspülfilter mit Filterkerzen mit Einbauelementen, bei denen sämtliche Filterkerzen auf einem Kreis oder auf drei oder mehr Kreisen angeordnet sind. Mehrere Filterkerzen könnten auch gruppenweise abgereinigt werden. Anstelle einer Kugel als Einbauelement könnte auch ein anderer, insbesondere sich drehender Körper in einem Käfig angeordnet sein, um eine pulsierende, wechselnde Reinigungsströmung zu erzeugen.

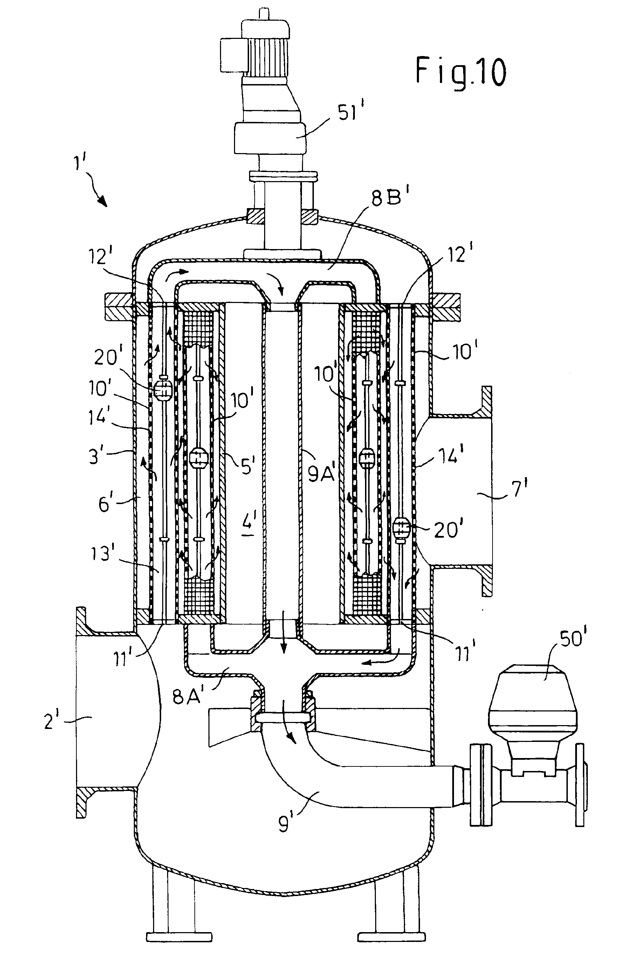

In Fig. 10 ist insgesamt mit Bezugszeichen 1' ein einen bewegbaren Reinigungskörper aufweisender Rückspülfilter zum Filtern eines über einen Filtereinlaß 2' in ein Filtergehäuse 3' des Rückspülfilters 1' einströmenden und mit Verunreinigungen versehenen Fluids dargestellt. Bei dem Fluid kann es sich um Wasser, aber auch um Öl, Benzin oder einen anderen Schmierstoff oder Brennstoff handeln. Zur Filtrierung bzw. Reinigung des einströmenden Fluids sind im Filtergehäuse 3' eine Vielzahl von Filterkerzen 10' angeordnet, wobei die einzelnen Filterkerzen 10' konzentrisch um eine Mittelachse des Filters 1' angeordnet sind und hierbei auf Umfangskreisen mit hier zwei unterschiedlichen Durchmessern angeordnet sind. In der Schnittansicht in Fig. 10 sind vier Filterkerzen 10' zu sehen. Sämtliche Filterkerzen 10' sind an ihrem oberen Ende 12' und an ihrem unteren Ende 11' offen, damit das über den Filtereinlaß 2' einströmende Fluid jeweils über die beiden Enden 11', 12' in den Filterelementinnenraum 13' eintreten kann. Um das zu reinigende Fluid im Filtrierbetrieb auch den oberen Enden 12' zuzuführen, ist im Zentrum eines beispielsweise die Filterkerzen 10 aufnehmenden Filtereinsatzes ein Strömungskanal 4' ausgebildet, der durch eine zylindrische Kanalwand 5' von einem Filtratraum 6' getrennt ist, der an den Filtratauslaß 7' angeschlossen ist. Zwischen den offenen Enden 11', 12' der Filterelemente 10' erstrecken sich Kopfplatten mit Aussparungen für die Enden der Filterkerzen 10', um die Sauberseite, d.h. den Filtratraum 6', von der Schmutzseite, d.h. vom Einlaß 2', zu trennen. Jeweils die den Filterelementinnenraum 13' jedes Filterelementes 10' umgebende Filterwand 14' bildet das Filtermittel, welches im gezeigten Ausführungsbeispiel im Filtrierbetrieb, wie bei den beiden inneren Filterkerzen mit den schwarzen Pfeilen angedeutet, von innen nach außen durchströmt ist, um durch Durchströmen der Filterwand 14' Filtrat im Filtratraum 6' zu bilden, welches am Filtratauslaß 7' aus dem Rückspülfilter 1' ausströmen kann.

Sowohl den unteren Enden 11' als auch den oberen Enden 12' ist jeweils ein Spülarm 8A' bzw. 8B' zugeordnet, wobei die Spülarme 8A' sowie 8B' derart versetzt zueinander angeordnet sind, daß zu einem Zeitpunkt, zu dem das obere Spülglied 8B' das in Fig. 10 linke Filterelement 10' am oberen Ende 12' rückspült, der untere Rückspülarm 8A' ein anderes Filterelement 10' wie z.B. das in Fig. 10 rechte Filterelement 10' am unteren Ende 11' rückspült. In der momentanen Drehstellung der beiden Spülarme 8A', 8B' zueinander werden die beiden auf dem inneren Kreis liegenden Filterelemente 10' momentan nicht mit den Armen der Rückspülglieder 8A', 8B' rückgespült, sondern befinden sich im Filtrierbetrieb, wie mit den Pfeilen angedeutet, da die Filterelemente 10' auf dem inneren Kreis und dem äußeren Kreis auf unterschiedlichen Radiallinien liegen. Im lokalen Rückspülbetrieb befindet sich allerdings der obere Abschnitt des linken äußeren Filterelementes 10' und der untere Abschnitt des rechten äußeren Filterelementes, wie mit den in umgekehrter Richtung vom Filtratraum 6' zum Filterelementinnenraum weisenden Pfeilen 13' angedeutet. Beide Rückspülglieder 8A', 8B' sind für den Rückspülbetrieb über eine gemeinsame, im unteren Teil des Filtergehäuses 3' ausgebildete Schmutzabzugsleitung 9' an ein ansteuerbares Ablaßventil 50' angeschlossen, mit dem die Schmutzabzugsleitung 9' und damit die Spülleitungen in den beiden Rückspülgliedern 8A', 8B' vorzugsweise mit Umgebungsdruck beaufschlagbar sind. Der Innenraum des oberen Spülglieds 8B' mündet über eine Verbindungsleitung 9A' in das untere Spülglied 8A', welche eine hohle Verbindungswelle bildet, im Zentrum des Strömungskanals 4' angeordnet ist und sich bei motorischer Betätigung der Rückspülglieder 8A', 8B' mittels des Motors 51' mit den Rückspülgliedern 8A', 8B' mitdreht.

Im Filterelementinnenraum 13' jedes Filterelementes 10' ist ein Reinigungskörper 20' angeordnet, der um ein vielfaches kürzer als die Filterkerze 10' ausgebildet ist und der durch den im Rückspülbetrieb mittels der Rückspülglieder 8A', 8B' aufgebrachten Reinigungsimpuls jeweils zu demjenigen Ende 11' bzw. 12' hinbewegt wird, das momentan über die Rückspülglieder 8A' bzw. 8B' an die Schmutzabzugsleitung 9' und damit an Umgebungsdruck angeschlossen ist. Fig. 1' zeigt die Stellung der Reinigungskörper 20' in den beiden äußeren, partiell im Rückspülbetrieb befindlichen Filterelemente 10' jeweils am Ende des Rückspülprozesses, während die beiden Reinigungskörper 20' der auf dem inneren Kreis liegenden, momentan im Filtrierbetrieb befindlichen Filterelemente 10' sich in einer Mittelstellung zwischen beiden ebenfalls offenen Enden 11', 12' befinden.

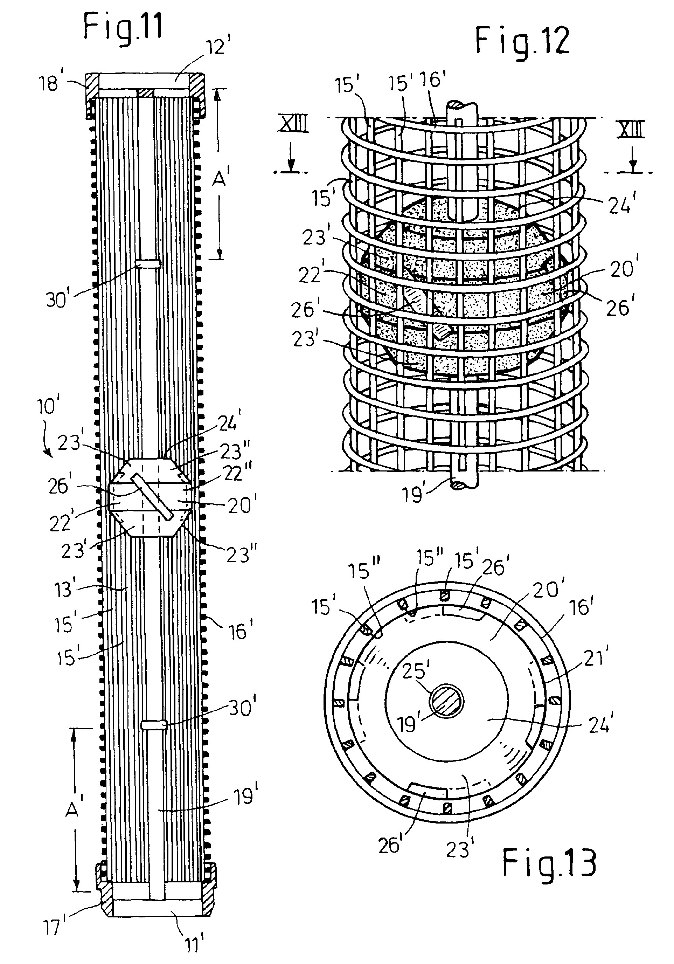

Der Aufbau der Filterelemente 10' wird nun unter Bezugnahme auf die Fig. 11 bis 13 näher erläutert. Die Filterelemente 10' sind vorzugsweise als Spaltfilterkerzen bzw. Spaltsiebfilter ausgeführt und es kann sich sowohl um Radialspaltkerzen als auch um Längsspaltkerzen handeln. Bei Längsspaltkerzen, wie in den Fig. 11 bis 13 gezeigt, sind am Umfang der Filterwand 14' koaxial zur Mittelachse der Filterkerze 13' eine Vielzahl von Profilstäben 15' angeordnet, die mittels eines außen um die Profilstäbe 15' vorzugsweise herumgewickelten Stützdrahts 16' zu einer in sich relativ stabilen, das Filtermittel bildenden Filterwand 14' versteift sind. Der Abstand zwischen zwei Profilstegen 15' bestimmt hierbei im wesentlichen die Filterfeinheit der Filterwand 14' und damit des Filtermittels der Filterkerze 10'. Zwei Endstücke 17' bzw. 18', die vorzugsweise aus Edelstahl oder auch aus Kunststoff od.dgl. bestehen können und mit denen jede Filterkerze 10' in die Kopfplatten eines Filtereinsatzes abgedichtet einsetzbar ist, nehmen jeweils die Endabschnitte der längs verlaufenden Profilstäbe 15' sowie die letzten Windungen des Stützdrahtes 16' auf. Die Anströmöffnungen werden von den offenen Enden 11', 12' in den beiden Endstücken 17' bzw. 18' gebildet.

Entlang der Mittelachse der Filterkerze 10' erstreckt sich eine Führungsstange 19' für den im Filterelementinnenraum 13' begrenzt beweglich angeordneten Reinigungskörper 20. Die Führungsstange 19' ist wiederum auf nicht gezeigte Weise in den beiden Endstücken 17', 18' z.B. mittels Querstäben verankert. Die Bewegungsbahn des Reinigungskörpers 20' zwischen den Enden 11', 12' der Filterkerze 10' ist mittels zweier hier an der Führungsstange 19' ausgebildeter Anschläge 30' begrenzt. Die beiden Anschläge 30' sind von den offenen Enden 11' bzw. 12' jeweils um das Abstandsmaß A' beabstandet. Die Anschläge 30' können bei einer Führungsstange 19' beispielsweise aus Ringen bestehen, die an der Führungsstange 19' angelötet oder angeschweißt sind. Erfindungsgemäß ist nicht nur der Bewegungsweg jedes Reinigungskörpers 20' zwischen beiden Enden 11', 12' mittels Anschlägen 30' begrenzt, sondern erfindungsgemäß ist auch zwischen dem Außenumfang 21' des Reinigungskörpers 20' und der Innenseite der Filterwand 14', mithin hier den Innenflächen 15'' der Profilstäbe 15', ein umlaufender Ringspalt ausgebildet, in welchem eine unmittelbar auf die Filterwand 14' wirkende Reinigungsspaltströmung entstehen kann. Der Reinigungskörper 20' ist im wesentlichen als Doppelkonus ausgebildet und mit einem in den Fig. 11 und 12 relativ breit dargestellten Mittelteil 22' sowie zwei den Enden 11' bzw. 12' zugewandten Endteilen 23' versehen, wobei die Umfangswand 22'' des Mittelteils 22' zylindrisch ausgebildet ist, während die beiden Endteile 23' jeweils konisch ausgebildet sind und ihre Umfangswand 23'' sich von den Stirnseiten 24' der Endteile 23' zum Mittelteil 22' hin kontinuierlich verbreitert. Der konische bzw. schräge Verlauf der Umfangswand 23' der Endteile 23' bewirkt bei einer Bewegung des Reinigungskörper 20', daß sowohl die Querströmung als insbesondere auch die Reinigungsspaltströmung vor dem Reinigungskörper 20' erhöht und damit die Reinigungswirkung an der Filterwand 14' des Filterelementes im Rückspülbetrieb verstärkt wird.

Im gezeigten Ausführungsbeispiel führt sich der Reinigungskörper 20' mit einer Mittelbohrung 25' an der Führungsstange 19'. Zur Verbesserung der Führung könnte auch eine mit der Führungsstange zusammenwirkende Führungsbuchse im Zentrum des Reinigungskörpers 20' angeordnet sein. Außerdem kann die Umfangswand 22'' des Mittelsteils 22' mit mehreren Nuten 26' versehen sein, die quer zur Längsachse der Filterkerze 10' verlaufen und die dazu dienen, den Reinigungskörper 20' bei seiner Bewegung entlang des Bewegungsweges zwischen beiden Anschlägen 30' zusätzlich in Rotation zu versetzen.

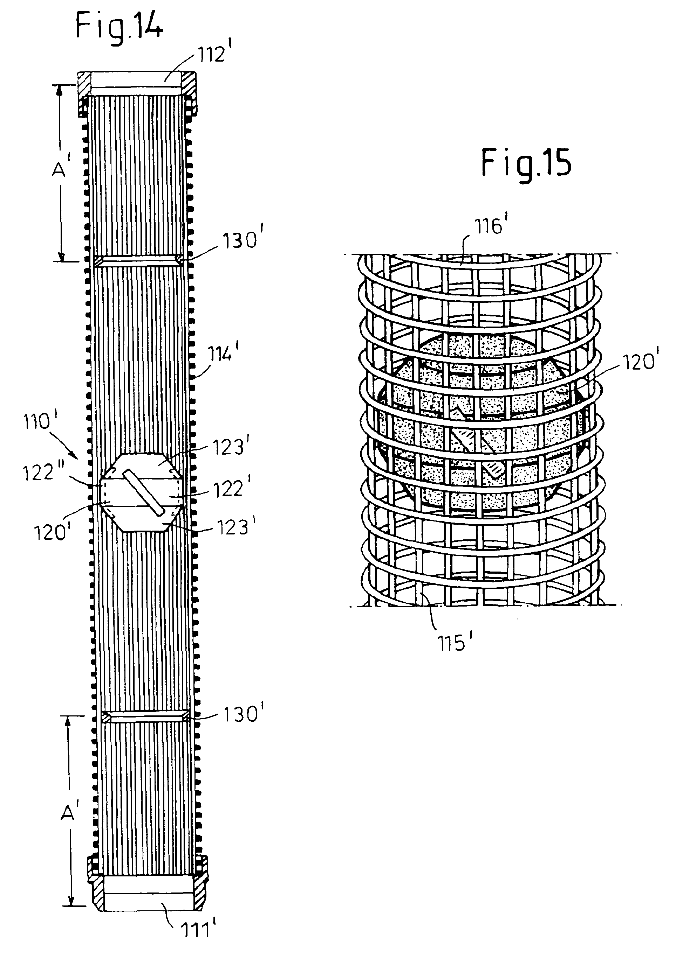

Die Fig. 14 und 15 zeigen ein alternatives Ausführungsbeispiel für eine Filterkerze 110' mit bewegbarem Reinigungskörper 120'. Der im Innenraum 113' der Filterkerze 110' angeordnete Reinigungskörper 120' hat wiederum einen Mittelteil 122' und zwei konische Endteile 123'. Die Bewegung des im Filterelementinnenraums 113' angeordneten Reinigungskörpers 120' ist zwischen zwei Anschlägen 130', die mit Abstand A' von den Einströmenden 111', 112' des Filterelementes 110' angeordnet sind, begrenzt. Die Anschläge 130' beim Filterelement 110' sind hier allerdings an der Innenseite des Filtermittels bzw. der Filterwand 114' ausgebildet und können aus dort angeklebten oder angelöteten Ringen bestehen. Auch die Filterkerze 110' ist als Längsspaltfilterkerze mit sich längs erstreckenden Profilstäben 115' und diese stützenden, außen um die Profilstäbe 115 herum angeordneten bzw. gewickelten Stützdrähten 116' ausgebildet. Die Oberfläche der die Anschläge 130' bildenden Ringe sowie auch die Oberfläche der Endteile 123' des Reinigungskörpers 120' bestehen vorzugsweise aus Gummi bzw. weisen Gummieinlagen auf, um Beschädigungen beim Anschlagen des Reinigungskörpers 120' an den Anschlägen 130' zu verhindern. Im Rückspülbetrieb der Filterkerze 110' tritt zu der Abreinigungswirkung des Reinigungsspaltes zwischen der Umfangswand 122'' des Mittelteils 122 des Reinigungskörpers 120' und der Filterwand 114' noch hinzu, daß durch die Anlage des Basisabschnitts der Endteile 123' an den an der Innenseite der Profilstäbe 115' ausgebildeten Ringen 130' der Ringspalt abrupt abgedichtet bzw. geschlossen wird, so daß die Reinigungsspaltströmung, die normalerweise bei der Bewegung des Reinigungskörpers 120' im Ringspalt sich als turbulente und die Querströmung verstärkende Strömung einstellt, abrupt abreißt, wodurch der Abreinigungseffekt an der Innenseite des Filtermittels zusätzlich noch verstärkt wird.

In beiden dargestellten Ausführungsbeispielen eines Filterelements 10', 110' mit bewegbarem Reinigungskörper 20', 120' ist der Bewegungsweg des Reinigungskörpers jeweils auf etwa 3/5 der Gesamtlänge der Filterkerzen 10', 110' begrenzt. Der Bewegungsweg kann jedoch auch geringer sein und insbesondere von dem freien Strömungsquerschnitt an den Enden der Filterkerze und der Filterfeinheit des Filtermittels in einer Weise abhängen, daß der Abstand des Anschlags vom Ende derart bemessen ist, daß die freie Siebfläche zwischen dem Anschlag und dem Ende dem Öffnungsquerschnitt an den Enden entspricht.

Im Rückspülprozeß hat die Bewegung des Reinigungskörpers 20' bzw. 120' auf das Rückspülorgan zu den weiteren Vorteil, daß insbesondere die Querströmung vor dem sich bewegenden Reinigungskörper 20', 120' aufgrund des abnehmenden, im Rückspülbetrieb befindlichen Filterelementinnenraums 13', 113' abnimmt und damit die bei gleichem Druckunterschied erzeugte Querströmung an bzw. durch die Filterwand 14', 114' hindurch zunimmt.

Für den Fachmann ergeben sich aus der vorhergehenden Beschreibung zahlreiche Modifikationen, die in den Schutzbereich der anhängenden Ansprüche fallen sollten. In Fig. 10 sind die beiden Spülglieder um 180° versetzt zueinander angeordnet. Um die Reinigungswirkung der Ringspaltströmung bei der Bewegung des Reinigungskörpers noch zu erhöhen, könnten die beiden Rückspülglieder auch derart angeordnet sein, daß die die entgegengesetzten Enden wechselweise mit einem Reinigungsimpuls beaufschlagenden Spülglieder nacheinander wirksam werden, mithin nur um wenige Grad zueinander versetzt angeordnet sind. Der Reinigungskörper wird dann im Rückspülbetrieb jedenfalls bei der Abreinigung mit dem zweiten, wirksam werdenden Rückspülglied bzw. Reinigungsimpuls über den gesamten Bewegungsweg vom einen Anschlag zum anderen Anschlag unter Entfaltung der Querströmung und der Reinigungsspaltströmung bewegt. Insbesondere vorteilhaft wäre dann noch, wenn sich nach einigen Reinigungsintervallen die Drehrichtung des Antriebsmotors für die Spülglieder umkehrt, um diesen zusätzlichen Effekt bei weiteren Reinigungsintervallen auch mit einer Bewegung des Reinigungskörpers in die andere Bewegungsrichtung auszunutzen. Die Anschläge können auch am Stützmittel befestigt sein und/oder das Stützmittel kann innerhalb der Profilstäbe bzw. der Filterwand angeordnet sein. Die in den Fig. gezeigten Abstände zwischen den Profilstäben sind nur beispielhaft und schematisch für eine mögliche Filterfeinheit und werden in der Anwendung meist deutlich geringer ausfallen, um Filterfeinheiten von beispielsweise 50-100 μm vorzusehen. Der jeweilige Abstand der Anschläge von den Enden der Filterkerze kann insbesondere näherungsweise mit der Formel

$$A = d/(4*f)$$

bestimmt werden, wobei "A" den Abstand, "d" den freien Durchmesser am jeweiligen Ende der Filterkerzen und "f" den Anteil der freien Filterfläche an der Gesamtfilterfläche angibt.

**Patentansprüche**

1. Rückspülfilter zum Filtern von Fluiden, mit mehreren, kreisförmig um eine Mittelachse angeordneten, an beiden Enden offenen Filterelementen, die ein mit einem Stützmittel abgestütztes, einen Filterelementinnenraum umgebendes und im Filtrierbetrieb eine in Filtrierrichtung durchströmte Filterwand bildendes Filtermittel aufweisen, mit um die Mittelachse rotierbaren, winkelversetzt zueinander angeordneten Rückspülgliedern für beide Enden der Filterelemente, mit denen die Filterelemente von beiden Enden her im Rückspülbetrieb mit einem zu- oder abströmenden Fluidstrom als Reinigungsimpuls beaufschlagbar sind, und mit einem im Filterelementinnenraum zwischen beiden Enden angeordneten Einbauelement, mit dem der Reinigungsimpuls im wesentlichen auf einen Filterelementabschnitt zwischen dem Einbauelement und dem an das Rückspülglied angeschlossene Ende konzentrierbar ist, **dadurch gekennzeichnet, dass** das Einbauelement ein Strömungsleitkörper (20; 120; 220) für die Filterelementmitte ist, wobei zwischen dem Strömungsleitkörper (20; 120; 220) und der Filterwand (14; 114; 214) wenigstens ein Durchlass ausgebildet ist, der im Rückspülbetrieb im Bereich der Filterelementmitte eine entlang der Filterwand (14; 114; 214) gerichtete und diese zusätzlich im Querstrom reinigende Reinigungsströmung (30) durchlässt.

2. Filterelement für einen Rückspülfilter zum Filtern von Fluiden insbesondere nach Anspruch 1, mit einem mit einem Stützmittel abgestützten, einen Filterelementinnenraum umgebenden und im Filtrierbetrieb eine in Filtrierrichtung durchströmte Filterwand bildenden Filtermittel, wobei das Filterelement an beiden Enden offen ist, von beiden Enden her im Rückspülbetrieb mit einem zu- oder abströmenden Fluidstrom als Reinigungsimpuls beaufschlagbar ist und im Filterelementinnenraum zwischen beiden Enden ein Einbauelement angeordnet ist, mit dem der Reinigungsimpuls im wesentlichen auf einen Filterelementabschnitt zwischen dem Einbauelement und einem der Enden konzentrierbar ist, **dadurch gekennzeichnet, dass** das Einbauelement ein Strömungsleitkörper (20; 120; 220) für die Filterelementmitte ist, wobei zwischen dem Strömungsleitkörper (20; 120; 220) und der Filterwand (14; 114; 214) wenigstens ein Durchlass ausgebildet ist, der im Rückspülbetrieb im Bereich der Filterelementmitte eine entlang der Filterwand (14; 114; 214) gerichtete und diese zusätzlich im Querstrom reinigende Reinigungsströmung (30) durchlässt.

3. Rückspülfilter oder Filterelement nach Anspruch 1 oder 2, **dadurch gekennzeichnet, dass** der Strömungsleitkörper (20; 120; 220) eine Länge hat, die kleiner ist als 10 % der Gesamtlänge des Filterelementes (10; 110; 210).

4. Rückspülfilter oder Filterelement nach einem der Ansprüche 1 bis 3, **dadurch gekennzeichnet, dass** der Strömungsleitkörper (120; 220) einen Mittelteil (121; 221) und jeweils einen den offenen Enden zugewandten Endteil (122; 222) aufweist, wobei sich die Umfangswand vom Mittelteil (121; 221) zu den Stirnseiten (123; 223) der Endteile (122; 222) vorzugsweise kontinuierlich verjüngt.

5. Rückspülfilter oder Filterelement nach einem der Ansprüche 1 bis 4, **dadurch gekennzeichnet, dass** der Strömungsleitkörper (120; 220) als Doppelkonus ausgebildet ist.

6. Rückspülfilter oder Filterelement nach einem der Ansprüche 1 bis 5, **dadurch gekennzeichnet, dass** der Strömungsleitkörper (220) unbeweglich in der Filterelementmitte angeordnet ist.

7. Rückspülfilter oder Filterelement nach Anspruch 4 und 6, **dadurch gekennzeichnet, dass** der Mittelteil (221) an seinem Umfang mit Abflachungen (227) versehen ist, die im Montagezustand des Strömungsleitkörpers (220) die Durchlässe (232) bilden.

8. Rückspülfilter oder Filterelement nach Anspruch 7, **dadurch gekennzeichnet, dass** der Mittelteil (221) fünf bis acht Abflachungen (227) aufweist.

9. Rückspülfilter oder Filterelement nach Anspruch 5, **dadurch gekennzeichnet, dass** der Strömungsleitkörper (320) aus zwei Teilkörpern, vorzugsweise zwei Tiefziehteilen (330) zusammengesetzt ist, die jeweils einen parallel zur Filterwand (314) verlaufenden Mittelabschnitt (321) und einen sich hieran anschließenden, vorzugsweise konisch zu den Enden sich verjüngenden Endabschnitt (322) aufweisen, wobei am Mittelabschnitt (321) ein umlaufender Kragen (325)anschließt, der umfangsverteilt mit Schlitzen (326) als Durchlässe versehen ist.

10. Rückspülfilter oder Filterelement nach Anspruch 9, **dadurch gekennzeichnet, dass** der Kragen (325) die Filterwand (314) durchgreift und am Außenumfang der Filterwand (314) befestigt ist.

11. Rückspülfilter oder Filterelement nach einem der Ansprüche 1 bis 10, **dadurch gekennzeichnet, dass** zwischen dem Strömungsleitkörper (120) und der Innenseite der Filterwand (114) ein umlaufender Ringspalt ausgebildet ist.

12. Rückspülfilter oder Filterelement nach einem der Ansprüche 1 bis 11, **dadurch gekennzeichnet, dass** der Strömungsleitkörper (120) drehbar in der Filterelementmitte angeordnet ist.

13. Rückspülfilter oder Filterelement nach Anspruch 12, **dadurch gekennzeichnet, dass** der Strömungsleitkörper (120) an einer Welle oder Stange (117) drehbar gelagert ist, die vorzugsweise an einem der Enden der Filterkerze (110) abgestützt ist.

14. Rückspülfilter oder Filterelement nach einem der Ansprüche 1 bis 5, **dadurch gekennzeichnet, dass** der Strömungsleitkörper (20) mehrere Durchlässe (26) aufweist, die mit einem Verschlusskörper (31) teilweise und wechselweise verschließbar sind.

15. Rückspülfilter oder Filterelement nach Anspruch 14, **dadurch gekennzeichnet, dass** der Strömungsleitkörper und der Verschlusskörper relativ zueinander beweglich sind.

16. Rückspülfilter oder Filterelement nach Anspruch 14 oder 15, **dadurch gekennzeichnet, dass** der Verschlusskörper eine Kugel (31) ist, die beweglich in einem den Strömungsleitkörper bildenden Aufnahmekäfig (21) ausgebildet ist.

17. Rückspülfilter oder Filterelement nach Anspruch 16, **dadurch gekennzeichnet, dass** der Aufnahmekäfig aus zwei Kappen (21) mit jeweils einem Boden (23), einer umlaufenden Seitenwand (24) und einem umlaufenden Befestigungskragen (25) besteht, wobei die Seitenwand (24) sich zum Boden (23) hin konisch verjüngt und auf wenigstens einem Kreis mit einer Vielzahl vorzugsweise gleichmäßig beabstandeter Löcher (26) als Durchlässe versehen ist.

18. Rückspülfilter oder Filterelement nach Anspruch 17, **dadurch gekennzeichnet, dass** die Löcher (26) in beiden Kappen (21) fluchtend zu einander ausgerichtet sind.

19. Rückspülfilter oder Filterelement nach einem der Ansprüche 1 bis 18, **dadurch gekennzeichnet, dass** das Filtermittel als Spaltsieb ausgeführt ist.

20. Rückspülfilter oder Filterelement nach einem der Ansprüche 1 bis 19, **dadurch gekennzeichnet, dass** die Rückspülglieder (8A, 8B) an eine vorzugsweise mit Umgebungsdruck beaufschlagbare Schmutzabzugsleitung (9) angeschlossen oder anschließbar sind.

21. Rückspülfilter zum Filtern von Fluiden mit mehreren, kreisförmig um eine Mittelachse angeordneten, an beiden Enden offenen Filterelementen, die ein mit einem Stützmittel abgestütztes, einen Filterelementinnenraum umgebendes und im Filtrierbetrieb eine in Filtrierrichtung durchströmte Filterwand bildendes Filtermittel aufweisen, mit um die Mittelachse rotierbaren, winkelversetzt zueinander angeordneten Rückspülgliedern für beide Enden der Filterelemente, mit denen die Filterelemente von beiden Enden her im Rückspülbetrieb mit einem zu- oder abströmenden Fluidstrom als Reinigungsimpuls beaufschlagbar sind, und mit einem im Filterelementinnenraum angeordneten, durch den Reinigungsimpuls hin- und herbewegbaren Reinigungskörper, **dadurch gekennzeichnet, daß** der Bewegungsweg des Reinigungskörpers (20'; 120') zwischen beiden Enden (11', 12'; 111', 112') mittels Anschlägen (30'; 130') begrenzt ist, die mit Abstand (A') von den Enden (11', 12'; 111', 112') am Filterelement ausgebildet sind, wobei zwischen einer Umfangswand (22''; 122'') des Reinigungskörpers (20'; 120') und einer Innenseite der Filterwand (13'; 113') ein Ringspalt für eine Reinigungsspaltströmung vorgesehen ist.

22. Rückspülfilter nach Anspruch 21, **dadurch gekennzeichnet, daß** die Filterelemente auf unterschiedlichen Kreisen angeordnet sind und jedem Kreis an jedem Ende (11', 12') eines Filterelementes (10') ein Rückspülglied (8A'; 8B') zugeordnet ist.

23. Rückspülfilter nach Anspruch 21 oder 22, **dadurch gekennzeichnet, daß** die Rückspülglieder (8A', 8B') an eine vorzugsweise mit Umgebungsdruck beaufschlagbare Schmutzabzugsleitung (8') angeschlossen sind.

24. Rückspülfilter nach einem der Ansprüche 21 bis 23, **dadurch gekennzeichnet, daß** das Rückspülglied für das eine Ende eines Filterelementes und das Rückspülglied für das andere Ende derart angeordnet sind, daß die Enden nacheinander mit dem gegensinnigen Rückspülimpuls beaufschlagt sind.

25. Rückspülfilter nach Anspruch 24, **dadurch gekennzeichnet, daß** die Rückspülglieder mittels eines Antriebsmotors antreibbar oder angetrieben sind, der die Drehrichtung der Rückspülglieder nach einer vorgebbaren Anzahl von Rückspülvorgängen umkehrt.

26. Filterelement für einen Rückspülfilter zum Filtern von Fluiden insbesondere nach einem der Ansprüche 21 bis 25, mit einem mit einem Stützmittel abgestützten, einen Filterelementinnenraum umgebenden und im Filtrierbetrieb eine in Filtrierrichtung durchströmte Filterwand bildenden Filtermittel, wobei das Filterelement an beiden Enden offen ist, von beiden Enden her im Rückspülbetrieb mit einem zu- oder abströmenden Fluidstrom als Reinigungsimpuls beaufschlagbar ist und im Filterelementinnenraum ein durch den Reinigungsimpuls hin- und herbewegbarer Reinigungskörper angeordnet ist, **dadurch gekennzeichnet, daß** der Bewegungsweg zwischen beiden Enden (11', 12'; 111', 112') mittels zweier Anschläge (30'; 130') begrenzt ist, die mit Abstand (A) von den Enden (11', 12'; 111', 112') angeordnet sind, und daß zwischen einer Umfangswand (22''; 122'') des Reinigungskörpers (20; 120) und einer Innenseite der Filterwand (14'; 114') ein Reinigungsspalt für eine Reinigungsspaltströmung vorgesehen ist.

27. Rückspülfilter oder Filterelement nach einem der Ansprüche 21 bis 26, **dadurch gekennzeichnet, daß** jedes Ende der Filterelemente eine vom freien Durchmesser der Öffnung abhängige freie Anströmfläche hat und jede Filterwand eine von der Filterfeinheit des Filtermittels und der Länge des Filterelementes abhängige freie Filtersiebfläche aufweist, wobei der Abstand des Anschlags vom zugehörigen Ende derart bemessen ist, daß die zwischen dem Anschlag und dem Ende verbleibende freie Siebfläche gleich oder größer ist als die Anströmfläche am jeweiligen Ende.

28. Rückspülfilter oder Filterelement nach einem der Ansprüche 21 bis 27, **dadurch gekennzeichnet, daß** die Anschläge (30'; 130') den Bewegungsweg des Reinigungskörpers (20'; 120') auf etwa 1/3 bis 3/5 der Länge des Filterelementes (10'; 110') begrenzen.

29. Rückspülfilter oder Filterelement nach einem der Ansprüche 21 bis 28, **dadurch gekennzeichnet, daß** der Reinigungskörper aus einem Kunststoffteil oder aus Gummi besteht.

30. Rückspülfilter oder Filterelement nach einem der Ansprüche 21 bis 29, **dadurch gekennzeichnet, daß** der Reinigungskörper (20'; 120') einen Mittelteil (22'; 122') und jeweils einen den offenen Enden zugewandten Endteil (23'; 123') aufweist, wobei sich die Umfangswand vom Mittelteil (22') zu den Stirnseiten (24') der Endteile (23') vorzugsweise kontinuierlich verjüngt.

31. Rückspülfilter oder Filterelement nach einem der Ansprüche 21 bis 30, **dadurch gekennzeichnet, daß** der Reinigungskörper (20'; 120') als Doppelkonus ausgebildet ist.

32. Rückspülfilter oder Filterelement nach Anspruch 30 oder 31, **dadurch gekennzeichnet, daß** der Reinigungskörper (20') zumindest in der Umfangswand (22'') des Mittelteils (22') mit Nuten (26') versehen ist.

33. Rückspülfilter oder Filterelement nach Anspruch 32, **dadurch gekennzeichnet, daß** die Nuten (26') schräg zur Bewegungsrichtung ausgerichtet sind und/oder sich bis in die breite Basis der Endteile (23') erstrecken.

34. Rückspülfilter oder Filterelement nach einem der Ansprüche 21 bis 33, **dadurch gekennzeichnet, daß** die Anschläge (130') an der Innenseite der Filterwand oder am Stützmittel ausgebildet sind.

35. Rückspülfilter oder Filterelement nach Anspruch 14, **dadurch gekennzeichnet, daß** die Anschläge (130') bei Anliegen des Reinigungskörpers (120') eine Abdichtung des Ringspaltes bewirken.

36. Rückspülfilter oder Filterelement nach einem der Ansprüche 21 bis 35, **dadurch gekennzeichnet, daß** der Reinigungskörper (20) an einem Führungselement (19') geführt ist.

37. Rückspülfilter oder Filterelement nach Anspruch 36, **dadurch gekennzeichnet, daß** das Führungselement eine zentrisch im Filterelementinnenraum (13') angeordnete Führungsstange (19') ist.

38. Rückspülfilter oder Filterelement nach Anspruch 36 oder 37, **dadurch gekennzeichnet, daß** die Anschläge (30') am Führungselement (19') ausgebildet sind.

39. Rückspülfilter oder Filterelement nach einem der Ansprüche 36 bis 38, **dadurch gekennzeichnet, daß** das Führungselement mit einer Wendel versehen ist, mit der der Reinigungskörper in Rotation versetzbar ist.

40. Rückspülfilter oder Filterelement nach einem der Ansprüche 21 bis 39, **dadurch gekennzeichnet, daß** die Filterwand (14'; 114') als Spaltfilter ausgeführt ist.

**Claims**

1. Backflushing filter for filtering fluids, with several filter elements open at both ends arranged in a circle around a centre axis, which comprise a filter means supported with a supporting means surrounding an inner space of a filter element and a filter wall flowed through in the filtering direction during the filtering operation, with backflushing members for both ends of the filter element arranged rotatably around the centre axis arranged in an angularly offset manner, with which the filter elements can be pressurised from both sides in the backflushing operation with an inflowing or outflowing fluid stream as cleaning pulse, and with a fitting element arranged in the inner space of the filter element with which the cleaning pulse can essentially be concentrated on a filter element section between the fitting element and the end connected to the backflushing member, **characterised in that** the fitting element is a flow baffle (20; 120; 220) for the centre of the filter element, wherein at least one passage is formed between the flow baffle (20; 120; 220) and the filter wall (14; 114; 214), which lets a cleansing cleaning flow (30) pass in the backflushing operation and additionally in cross-flow operation in the region of the centre of the filter element directed along the filter wall (14; 114; 214).

2. Filter element for a backflushing filter for filtering fluids, particularly according to claim 1, with a filter means supported with a supporting means surrounding an inner space of a filter element and a filter wall flowed through in the filtering direction during the filtering operation, wherein the filter element is open at both sides, can be pressurised with an inflowing or outflowing fluid stream as cleaning pulse in the backflushing operation and a fitting element is arranged in the inner space of the filter element between both ends, with which the cleaning pulse can essentially be concentrated on a filter element section between the fitting element and one of the ends, **characterised in that** the fitting element is a flow baffle (20; 120; 220) for the centre of the filter element, wherein at least one passage is formed between the flow baffle (20; 120; 220) and the filter wall (14; 114; 214), which lets a cleansing cleaning flow (30) pass in the backflushing operation and additionally in cross-flow operation in the region of the centre of the filter element directed along the filter wall (14; 114; 214).

3. Backflushing filter or filter element according to claim 1 or 2, **characterised in that** the flow baffle (20; 120; 220) has a length which is smaller than 10 % of the entire length of the filter element (10; 110; 210).

4. Backflushing filter or filter element according to one of claims 1 to 3, **characterised in that** the flow baffle (120; 220) comprises a centre part (121; 221) and an end part (122; 222) respectively facing the open ends, wherein the circumferential wall preferably tapers continually from the centre part (121; 221) to the front faces (123; 223) of the end parts (122; 222).

5. Backflushing filter or filter element according to one of claims 1 to 4, **characterised in that** the flow baffle (120; 220) is formed as a double cone.

6. Backflushing filter or filter element according to one of claims 1 to 5, **characterised in that** the flow baffle (220) is arranged in a fixed manner in the centre of the filter element.

7. Backflushing filter or filter element according to claim 4 and 6, **characterised in that** the centre part (221) is provided with flat portions (227) at its circumference, which form the passages (232) in the assembly state of the flow baffle (220).

8. Backflushing filter or filter element according to claim 7, **characterised in that** the centre part (221) comprises five to eight flat portions (227).

9. Backflushing filter or filter element according to claim 5, **characterised in that** the flow baffle (320) is composed of two partial bodies, preferably two deep-drawing parts (330), which respectively comprise a centre section (221) parallel to the filter wall (314) and an end section (322) connected thereto, preferably tapering conically towards the ends, wherein a circumferential collar (325) is connected to the centre section (321), which is provided with slots (366) as passages distributed around the circumference.

10. Backflushing filter or filter element according to claim 9, **characterised in that** the collar (325) passes through the filter wall (314) and is secured to the outer circumference of the filter wall (314).

11. Backflushing filter or filter element according to one of claims 1 to 10, **characterised in that** a circumferential annular gap is formed between the flow baffle (120) and the inner side of the filter wall (114).

12. Backflushing filter or filter element according to one of claims 1 to 11, **characterised in that** the flow baffle (120) is mounted in the centre of the filter element in a rotary manner.

13. Backflushing filter or filter element according to claim 12, **characterised in that** the flow baffle (120) is mounted in a rotary manner at a shaft or bar (117), which is preferably supported at one of the ends of the filter cartridge (110).

14. Backflushing filter or filter element according to one of claims 1 to 5, **characterised in that** the flow baffle (20) comprises several passages (26) which can be closed partially and alternately with a closing body (31).

15. Backflushing filter or filter element according to claim 14, **characterised in that** the flow baffle and the closing body can be moved relatively to one another.

16. Backflushing filter or filter element according to claim 14 or 15, **characterised in that** the closing body is a ball (31) which is formed in a reception cage (21) forming the flow baffle in a movable manner.

17. Backflushing filter or filter element according to claim 16, **characterised in that** the reception cage consists of two caps (21) with respectively a bottom (23), a circumferential side wall (24) and a circumferential mounting collar (25), wherein the side wall (24) tapers conically towards the bottom (23) and is provided with a plurality of preferably evenly spaced holes (26) as passages on at least one circle,

18. Backflushing filter or filter element according to claim 17, **characterised in that** the holes (26) are aligned in a flush manner in both caps (21).

19. Backflushing filter or filter element according to one of claims 1 to 18, **characterised in that** the filter means is formed as a gap sieve.

20. Backflushing filter or filter element according to one of claims 1 to 19, **characterised in that** the backflushing members (8A, 8B) are connected or can be connected to a contamination take-off line (9) which can preferably be pressurised with ambient pressure.

21. Backflushing filter for filtering fluids, with several filter elements open at both ends arranged in a circle around a centre axis, which comprise a filter means supported with a supporting means surrounding an inner space of a filter element and a filter wall flowed through in the filtering direction during the filtering operation, with backflushing members for both ends of the filter element arranged rotatably around the centre axis arranged in an angularly offset manner, with which the filter elements can be pressurised from both sides in the backflushing operation with an inflowing or outflowing fluid stream as cleaning pulse, and a cleaning body arranged in the inner space of the filter element, which can be moved back and forth by the cleaning pulse, **characterised in that** the movement path of the cleaning body (20'; 120') between both ends (11', 12'; 111', 112') is limited by means of stops (30'; 130') which are formed at the filter element arranged with a distance (A) from the ends (11', 12'; 111', 112'), wherein an annular gap for a cleaning gap flow is provided between a circumferential wall (22"; 122") of the cleaning body (20'; 120') and an inner side of the filter wall (13'; 113') for a cleaning gap flow.

22. Backflushing filter according to claim 21, **character-**

**ised in that** the filter elements are arranged on different circles, and a backflushing member (8A'; 8B') is assigned to each circle at each end (11', 12') of a filter element (10').

23. Backflushing filter according to claim 21 or 22, **characterised in that** the backflushing members (8A', 8B') are connected to a contamination take-off line (8') which can preferably be pressurised with ambient pressure.

24. Backflushing filter according to one of claims 21 to 23, **characterised in that** the backflushing member for the one end of a filter element and the backflushing member for the other end are arranged in such a manner that the ends are successively pressurised with the inverse backflushing pulse.

25. Backflushing filter according to claim 24, **characterised in that** the backflushing members can be or are driven by means of a drive motor, which reverses the rotary direction of the backflushing members according to a presettable number of backflushing processes.

26. Filter element for a backflushing filter for filtering fluids, particularly according to one of claims 21 to 25, with a filter means supported with a supporting means surrounding an inner space of a filter element and a filter wall flowed through in the filtering direction during the filtering operation, wherein the filter element is open at both ends, can be pressurised from both ends in the backflushing operation with a fluid flow as cleaning pulse flowing against or flowing off and a cleaning body which can be moved back and forth in the inner space of the filter element by the cleaning pulse, **characterised in that** the movement path between both ends (11', 12'; 111', 112') is limited by means of two stops (30'; 130') which are arranged with a distance (A) from the ends (11', 12'; 111', 112'), and that a cleaning gap for a cleaning gap flow is provided between a circumferential wall (22"; 122") of the cleaning body (20; 120) and an inner side of the filter wall (14'; 114').

27. Backflushing filter or filter element according to one of claims 21 to 26, **characterised in that** each end of the filter elements has a free flow surface depending on the free diameter of the opening and every filter wall comprises a free filter screen surface depending on the grade of filtration of the filter means and the length of the filter element, wherein the distance of the stop from the associated end is dimensioned in such a manner that the free screen surface remaining between the stop and the end is the same or larger than the flow surface at the respective end.

28. Backflushing filter or filter element according to one of claims 21 to 27, **characterised in that** the stops (30'; 130') limit the movement path of the cleaning body (20'; 120') to approximately 1/3 to 3/5 of the length of the filter element (10', 110')

29. Backflushing filter or filter element according to one of claims 21 to 28, **characterised in that** the cleaning body consists of a plastics part or of rubber.

30. Backflushing filter or filter element according to one of claims 21 to 29, **characterised in that** the cleaning body (20'; 120') comprises a centre part (22'; 122') and respectively an end part (23; 123') facing the open ends, wherein the circumferential wall preferably tapers continually from the centre part (22') to the front faces (24') of the end parts (23').

31. Backflushing filter or filter element according to one of claims 21 to 30, **characterised in that** the cleaning body (20'; 120') is formed as a double cone.

32. Backflushing filter or filter element according to claim 30 or 31, **characterised in that** the cleaning body (20') is provided with grooves (26') in at least the circumferential wall (22") of the centre part (22').

33. Backflushing filter or filter element according to claim 32, **characterised in that** the grooves (26') are adjusted obliquely to the movement direction and/or extend to the wide base of the end parts (23').

34. Backflushing filter or filter element according to one of claims 21 to 33, **characterised in that** the stops (130') are formed at the inner side of the filter wall or at the support means.

35. Backflushing filter or filter element according claim 14, **characterised in that** stops (130') effect a sealing of the annular gap during the abutment of the cleaning body (120').

36. Backflushing filter or filter element according to one of claims 21 to 35, **characterised in that** the cleaning body (20) is guided at a guide element (19').

37. Backflushing filter or filter element according to claim 36, **characterised in that** the guide element is a guide rod (19') arranged centrally in the inner space (13') of the filter element.

38. Backflushing filter or filter element according to claim 36 or 37, **characterised in that** the stops (30') are formed at the guide element (19').

39. Backflushing filter or filter element according to one of claims 36 to 38, **characterised in that** the guide element is provided with a coil, with which the cleaning body can be rotated.

40. Backflushing filter or filter element according to one of claims 21 to 39, **characterised in that** the filter wall (14'; 114') is designed as a gap filter.

## Revendications

1. Filtre à rinçage à contre-courant pour filtrer des fluides, comprenant : plusieurs éléments de filtrage circulaires agencés autour d'un axe médian, ouverts aux deux extrémités, qui présentent un moyen de filtrage soutenu avec un moyen d'appui, entourant un intérieur de l'élément de filtrage, et constituant lors du fonctionnement en filtration une paroi de filtrage traversée dans la direction de filtrage ; des organes de rinçage à contre-courant pour les deux extrémités des éléments de filtrage, rotatifs autour de l'axe médian, agencés avec un décalage angulaire entre eux et permettant lors du fonctionnement en rinçage d'alimenter les éléments de filtrage à contre-courant par les deux extrémités au moyen d'un courant de fluide arrivant et partant, servant d'impulsion de nettoyage ; et un insert agencé dans l'intérieur d'élément de filtrage entre les deux extrémités, avec lequel l'impulsion de nettoyage peut être concentrée sensiblement sur une région d'élément de filtrage entre l'insert et l'extrémité raccordée à l'organe de rinçage à contre-courant, **caractérisé en ce que** l'insert est un corps de guidage d'écoulement (20 ; 120 ; 220) pour le milieu de l'élément de filtrage, dans lequel il est formé au moins un passage entre le corps de guidage d'écoulement (20 ; 120 ; 220) et la paroi de filtrage (14 ; 114 ; 214), au moins un passage qui lors du fonctionnement en rinçage à contre-courant laisse passer un courant de nettoyage (30) orienté le long de la paroi de filtrage (14 ; 114 ; 214) et nettoyant en outre celle-ci en écoulement transversal dans la région du milieu de l'élément de filtrage.

2. Elément de filtrage pour un filtre à rinçage à contre-courant pour le filtrage des fluides en particulier selon la revendication 1, comprenant un moyen de filtrage soutenu avec un moyen d'appui, entourant un intérieur d'élément de filtrage, et constituant lors du fonctionnement en filtration une paroi de filtrage traversée dans la direction de filtrage, l'élément de filtrage étant ouvert aux deux extrémités et pouvant lors du fonctionnement en rinçage à contre-courant être alimenté par les deux extrémités au moyen d'un courant de fluide arrivant ou partant servant d'impulsion de nettoyage, et il y a, agencé dans l'intérieur d'élément de filtrage entre les deux extrémités, un insert permettant de concentrer l'impulsion de nettoyage sensiblement sur une région d'élément de filtrage entre l'insert et l'une des extrémités, **caractérisé en ce que** l'insert est un corps de guidage d'écoulement (20 ; 120 ; 220) pour le milieu de l'élément de filtrage, dans lequel il est formé au moins un passage entre le corps de guidage d'écoulement (20 ; 120 ; 220) et la paroi de filtrage (14 ; 114 ; 214), au moins un passage qui lors du fonctionnement en rinçage à contre-courant laisse passer un courant de nettoyage (30) orienté le long de la paroi de filtrage (14 ;114 ;214) et nettoyant en outre celle-ci en écoulement transversal dans la région du milieu de l'élément de filtrage.

3. Filtre à rinçage à contre-courant ou élément de filtrage selon la revendication 1 ou 2, **caractérisé en ce que** le corps de guidage d'écoulement (20 ; 120 ; 220) a une longueur inférieure à 10% de la longueur totale de l'élément de filtrage (10 ; 110 ; 210).

4. Filtre à rinçage à contre-courant ou élément de filtrage selon l'une des revendications 1 à 3, **caractérisé en ce que** le corps de guidage d'écoulement (120 ; 220) présente une partie centrale (121 ; 221) et à chaque fois une partie terminale (122 ; 222) tournée vers les extrémités ouvertes, la paroi périphérique de la partie centrale (121 ; 221) se rétrécissant, de préférence continûment, jusqu'aux faces d'extrémité (123 ; 223) des parties terminales (122 ; 222).

5. Filtre à rinçage à contre-courant ou élément de filtrage selon l'une des revendications 1 à 4, **caractérisé en ce que** le corps de guidage d'écoulement (120 ; 220) est formé comme un double cône.

6. Filtre à rinçage à contre-courant ou élément de filtrage selon l'une des revendications 1 à 5, **caractérisé en ce que** le corps de guidage d'écoulement (220) est agencé immobile au milieu de l'élément de filtrage.

7. Filtre à rinçage à contre-courant ou élément de filtrage selon les revendications 4 et 6, **caractérisé en ce que** la partie centrale (221) est prévue sur son pourtour avec des méplats (227) qui forment les passages (232) à l'état d'assemblage du corps de guidage d'écoulement (220).

8. Filtre à rinçage à contre-courant ou élément de filtrage selon la revendication 7, **caractérisé en ce que** la partie centrale (221) présente cinq à huit méplats (227).

9. Filtre à rinçage à contre-courant ou élément de filtrage selon la revendication 5, **caractérisé en ce que** le corps de guidage d'écoulement (320) est composé de deux sous-corps, de préférence deux pièces embouties (330), qui présentent chacune une partie centrale (321) s'étendant parallèlement à la paroi de filtrage (314) et une partie terminale (322) s'y rattachant, de préférence se rétrécissant coniquement jusqu'aux extrémités, et **en ce qu'**à la partie centrale (321) se rattache une collerette (325) périphérique munie de fentes (326) réparties sur son pourtour en guise de passages.

10. Filtre à rinçage à contre-courant ou élément de filtrage selon la revendication 9, **caractérisé en ce que** la collerette (325) traverse la paroi de filtrage (314) et est fixée au pourtour extérieur de la paroi de filtrage (314).

11. Filtre à rinçage à contre-courant ou élément de filtrage selon l'une des revendications 1 à 10, **caractérisé en ce qu'**une fente annulaire périphérique est formée entre le corps de guidage d'écoulement (120) et l'intérieur de la paroi de filtrage (114).

12. Filtre à rinçage à contre-courant ou élément de filtrage selon l'une des revendications 1 à 11, **caractérisé en ce que** le corps de guidage d'écoulement (120) est agencé rotatif dans le centre de l'élément de filtrage.

13. Filtre à rinçage à contre-courant ou élément de filtrage selon la revendication 12, **caractérisé en ce que** le corps de guidage d'écoulement (120) est supporté rotatif sur un arbre ou une tige (117), qui est de préférence appuyé(e) à une extrémité de la bougie filtrante (110).

14. Filtre à rinçage à contre-courant ou élément de filtrage selon l'une des revendications 1 à 5, **caractérisé en ce que** le corps de guidage d'écoulement (20) présente plusieurs passages (26) qui sont fermés partiellement et alternativement à l'aide d'un obturateur (31).

15. Filtre à rinçage à contre-courant ou élément de filtrage selon la revendication 14, **caractérisé en ce que** le corps de guidage d'écoulement et l'obturateur sont déplaçables l'un relativement à l'autre.

16. Filtre à rinçage à contre-courant ou élément de filtrage selon la revendication 14 ou 15, **caractérisé en ce que** l'obturateur est une boule (31) qui est réalisée déplaçable dans une cage de réception (21) formant le corps de guidage d'écoulement.

17. Filtre à rinçage à contre-courant ou élément de filtrage selon la revendication 16, **caractérisé en ce que** la cage de réception est formée de deux capuchons (21) ayant chacun un fond (23), d'une paroi latérale (24) périphérique et d'une collerette de fixation (25) périphérique, la paroi latérale (24) se rétrécissant coniquement jusqu'au fond (23) et étant prévue sur au moins un cercle avec une pluralité de trous (26), de préférence régulièrement espacés, en guise de passages.

18. Filtre à rinçage à contre-courant ou élément de filtrage selon la revendication 17, **caractérisé en ce que** les trous (26) sont orientés alignés les uns avec les autres dans les deux capuchons (21).

19. Filtre à rinçage à contre-courant ou élément de filtrage selon l'une des revendications 1 à 18, **caractérisé en ce que** le moyen de filtrage est réalisé en tant que tamis à barreaux à petits interstices.

20. Filtre à rinçage à contre-courant ou élément de filtrage selon l'une des revendications 1 à 19, **caractérisé en ce que** les organes de rinçage à contre-courant (8A, 8B) sont raccordés ou peuvent être raccordés à une conduite d'évacuation des impuretés (9) pouvant de préférence être exposée à la pression ambiante.

21. Filtre à rinçage à contre-courant pour filtrer des fluides, comprenant : plusieurs éléments de filtrage circulaires agencés autour d'un axe médian, ouverts aux deux extrémités, qui présentent un moyen de filtrage soutenu avec un moyen d'appui, entourant un intérieur de l'élément de filtrage, et constituant lors du fonctionnement en filtration une paroi de filtrage traversée dans la direction de filtrage ; des organes de rinçage à contre-courant pour les deux extrémités des éléments de filtrage, rotatifs autour de l'axe médian, agencés avec un décalage angulaire entre eux et permettant lors du fonctionnement en rinçage d'alimenter les éléments de filtrage à contre-courant par les deux extrémités au moyen d'un courant de fluide arrivant ou partant, servant d'impulsion de nettoyage ; et un corps de nettoyage agencé dans l'intérieur d'élément de filtrage, déplaçable dans un sens et dans l'autre grâce à l'impulsion de nettoyage, **caractérisé en ce que** le trajet de déplacement du corps de nettoyage (20' ; 120') est limité entre les deux extrémités (11', 12' ; 111', 112') au moyen de butées (30' ; 130') qui sont formées sur l'élément de filtrage à distance (A') des extrémités (11', 12' ; 111', 112'), un interstice annulaire étant prévu pour un courant interstitiel de nettoyage entre une paroi périphérique (22" ; 122") du corps de nettoyage (20' ; 120') et une face intérieure de la paroi de filtrage (12' ; 113').

22. Filtre à rinçage à contre-courant selon la revendication 21, **caractérisé en ce que** les éléments de filtrage sont agencés sur différents cercles et un organe de rinçage à contre-courant (8A' ; 8B') est associé à chaque cercle à chaque extrémité (11', 12') d'un élément de filtrage (10').

23. Filtre à rinçage à contre-courant selon la revendication 21 ou 22, **caractérisé en ce que** les organes de rinçage à contre-courant (8A' ; 8B') sont raccordés à une conduite d'évacuation des impuretés (8') pouvant de préférence être exposée à la pression ambiante.

24. Filtre à rinçage à contre-courant selon l'une des revendications 21 à 23, **caractérisé en ce que** l'organe de rinçage à contre-courant pour une première extrémité d'un élément de filtrage et l'organe de rinçage à contre-courant pour l'autre extrémité sont agencés de façon que les extrémités soient alimentées l'une après l'autre avec l'impulsion de rinçage à contre-courant dans un sens opposé.

25. Filtre à rinçage à contre-courant selon la revendication 24, **caractérisé en ce que** les organes de rinçage à contre-courant sont entraînés, ou entraînables, au moyen d'un moteur d'entraînement qui inverse le sens de marche des organes de rinçage à contre-courant après un nombre prédéterminé de processus de rinçage à contre-courant.

26. Elément de filtrage pour un filtre à rinçage à contre-courant pour le filtrage des fluides en particulier selon l'une des revendications 21 à 25, comprenant un moyen de filtrage soutenu avec un moyen d'appui, entourant un intérieur d'élément de filtrage, et constituant lors du fonctionnement en filtration une paroi de filtrage traversée dans la direction de filtrage, l'élément de filtrage étant ouvert aux deux extrémités et pouvant lors du fonctionnement en rinçage à contre-courant être alimenté par les deux extrémités au moyen d'un courant de fluide arrivant ou partant, servant d'impulsion de nettoyage, un corps de nettoyage étant agencé déplaçable dans un sens et dans l'autre grâce à l'impulsion de nettoyage, dans l'intérieur d'élément de filtrage, **caractérisé en ce que** le trajet de déplacement entre les deux extrémités (11', 12' ; 111', 112') est limité grâce à deux butées (30' ; 130') qui sont agencées à distance (A) des extrémités (11', 12' ; 111', 112'), et **en ce qu'**il est prévu un interstice de nettoyage pour un courant interstitiel de nettoyage, entre une paroi périphérique (22" ; 122") du corps de nettoyage (20 ; 120) et une face intérieure de la paroi de filtrage (14' ; 114').

27. Filtre à rinçage à contre-courant ou élément de filtrage selon l'une des revendications 21 à 26, **caractérisé en ce que** chaque extrémité de l'élément de filtrage a une surface d'afflux libre dépendante du diamètre libre de l'ouverture et chaque paroi de filtrage présente une surface libre de tamis de filtrage dépendante de la finesse de filtrage du moyen de filtrage et de la longueur de l'élément de filtrage, la distance entre la butée jusqu'à l'extrémité correspondante étant calculée de façon que la surface libre de tamis subsistant entre la butée et l'extrémité soit égale ou supérieure à la surface d'afflux.

28. Filtre à rinçage à contre-courant ou élément de filtrage selon l'une des revendications 21 à 27, **carac-**

**térisé en ce que** les butées (30' ; 130') délimitent le trajet de déplacement du corps de nettoyage (20' ; 120') à environ 1/3 à 3/5 de la longueur de l'élément de filtrage (10' ; 110').

29. Filtre à rinçage à contre-courant ou élément de filtrage selon l'une des revendications 21 à 28, **caractérisé en ce que** le corps de nettoyage est composé d'une pièce en matière synthétique ou en caoutchouc.

30. Filtre à rinçage à contre-courant ou élément de filtrage selon l'une des revendications 21 à 29, **caractérisé en ce que** le corps de nettoyage (20' ; 120') présente une partie centrale (22' ; 122') et à chaque fois une partie terminale (23' ; 123') tournée vers les extrémités ouvertes, la paroi périphérique de la partie centrale (22') se rétrécissant de préférence continûment jusqu'aux faces d'extrémité (24') de la partie terminale (23').

31. Filtre à rinçage à contre-courant ou élément de filtrage selon l'une des revendications 21 à 30, **caractérisé en ce que** le corps de nettoyage (20' ; 120') est formé comme un double cône.

32. Filtre à rinçage à contre-courant ou élément de filtrage selon la revendication 30 ou 31, **caractérisé en ce que** le corps de nettoyage (20') est muni de rainures (26') au moins dans la paroi périphérique (22") de la partie centrale (22').

33. Filtre à rinçage à contre-courant ou élément de filtrage selon la revendication 32, **caractérisé en ce que** les rainures (26') sont orientées en biais par rapport à la direction de déplacement et/ou s'étendent jusque dans la base large des parties terminales (23').

34. Filtre à rinçage à contre-courant ou élément de filtrage selon l'une des revendications 21 à 33, **caractérisé en ce que** les butées (130') sont formées sur la face intérieure de la paroi de filtrage ou sur le moyen d'appui.

35. Filtre à rinçage à contre-courant ou élément de filtrage selon la revendication 14, **caractérisé en ce que** les butées (130') assurent une obturation du passage annulaire lors de l'appui du corps de nettoyage (120').

36. Filtre à rinçage à contre-courant ou élément de filtrage selon l'une des revendications 21 à 35, **caractérisé en ce que** le corps de nettoyage (20) est guidé sur un élément de guidage (19').

37. Filtre à rinçage à contre-courant ou élément de filtrage selon la revendication 36, **caractérisé en ce**

**que** l'élément de guidage est une tige de guidage (19') agencée de façon centrale dans l'intérieur d'élément de filtrage (13').

38. Filtre à rinçage à contre-courant ou élément de filtrage selon la revendication 36 ou 37, **caractérisé en ce que** les butées (30') sont formées sur l'élément de guidage (19').

39. Filtre à rinçage à contre-courant ou élément de filtrage selon l'une des revendications 36 à 38, **caractérisé en ce que** l'élément de guidage est prévu avec une hélice permettant de mettre le corps de nettoyage en rotation.

40. Filtre à rinçage à contre-courant ou élément de filtrage selon l'une des revendications 21 à 39, **caractérisé en ce que** la paroi de filtrage (14' ; 114') est formée en tant que filtre à barreaux.

Fig.1

Fig. 2

Fig. 3

Fig.4

Fig.5

Fig.6

212

VII          VII

227
222
220
221

228  227
228
222
215
216

210
214

216

Fig.7

215       210
216  228
220           227

223
227
221       232

Fig.7

Fig.8

Fig.9

EP 1 814 643 B1

Fig.10

27

# Fig.11

# Fig.12

# Fig.13

# Fig.14

# Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1225963 A1
- DE 10244292 A1
- DE 10244660 A1
- DE 10024401 A2
- DE 10024402 C2